# EUROPEAN PATENT APPLICATION

(11) **EP 2 378 738 A1**
(43) Date of publication of application: **19.10.2011**
(21) Application number: 08878917.7
(22) Date of filing: 17.12.2008
(51) Int. Cl.: H04L 29/08, H04W 28/04, H04W 28/14

(54) **PACKET TRANSMITTER, PACKET RECEIVER, COMMUNICATION SYSTEM, AND PACKET COMMUNICATION METHOD**

(71) Applicant: Fujitsu Limited, Kawasaki-shi, Kanagawa 211-8588 (JP)
(72) Inventor: FUKUDA, Isamu, Kawasaki-shi Kanagawa 211-8588 (JP); HATAKEYAMA, Shinya, Kawasaki-shi Kanagawa 211-8588 (JP); IWAMURA, Naoto, Kawasaki-shi Kanagawa 211-8588 (JP); OHHASHI, Akio, Kawasaki-shi Kanagawa 211-8588 (JP)
(74) Representative: Holz, Ulrike
(86) International application number: PCT/JP2008/072993
(87) International publication number: WO 2010/070749

(57) **Abstract**

A packet transmitting apparatus 2 includes: a packet transmitting unit 20 which transmits a packet having a preassigned sequence number to a destination apparatus 3; a transmitted-packet indication information generating unit 21 which generates transmitted-packet indication information that indicates the packet transmitted by the packet transmitting unit 20; and a transmitted-packet indication information transmitting unit 23 which transmits the transmitted-packet indication information to the destination apparatus 3 separately from the packet.

## Description

### FIELD

The present invention relates to a communication system for transmitting and receiving packets having preassigned packet numbers, and may include the reordering of packets at the receiving end.

### BACKGROUND

In recent years, HSUPA (High Speed Uplink Packet Access) has been under study to provide a transmission standard that enhances uplink packet communication speeds in W-CDMA (Wideband-Code Division Multiple Access).

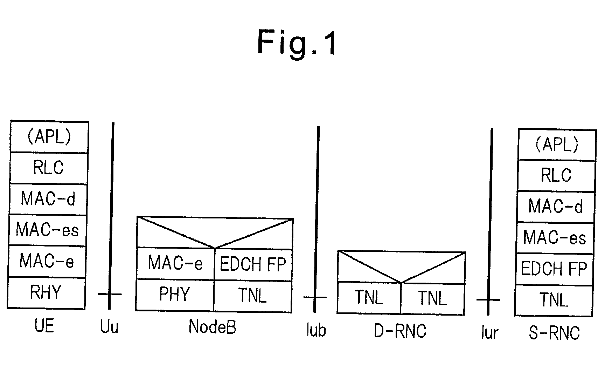

FIG. 1 is a diagram illustrating the layer structure at each node as defined in HSUPA. A mobile station as user equipment (UE) includes a physical layer (PHY) at layer L1 and MAC sub-layers (MAC-d, MAC-es/MAC-e) and an RLC (Radio Link Control) layer at layer L2. The MAC sub-layers include a MAC-d (MAC dedicated) layer, a MAC-e (MAC-enhanced) layer, and a MAC-es layer (MAC-enhanced sub-layer).

A base station (NodeB) includes a physical layer (PHY) for communicating with the mobile station in accordance with a Uu interface and a TNL (Transport Network Layer) for performing packet communication with a radio network controller (RNC) in accordance with an Iub/Iur interface. The base station further includes a MAC-e layer and an EDCH FP (Enhanced DCH Frame Protocol) layer. The Uu interface (the radio interface between UTLAN and user equipment) is the interface connecting between a radio access network and the mobile station. On the other hand, the Iub interface (the interface between RNC and NodeB) is the interface connecting between the base station and one radio network controller. The Iur interface (a logical interface between two RNCs) is the interface connecting between two radio network controllers.

One of the radio network controllers, designated as SRNC (Serving RNC), includes a TNL layer, an EDCH FP layer, a MAC-es layer, a MAC-d layer, and an RLC layer. The other one of the radio network controllers, designated as DRNC (Drift RNC), includes a TNL layer.

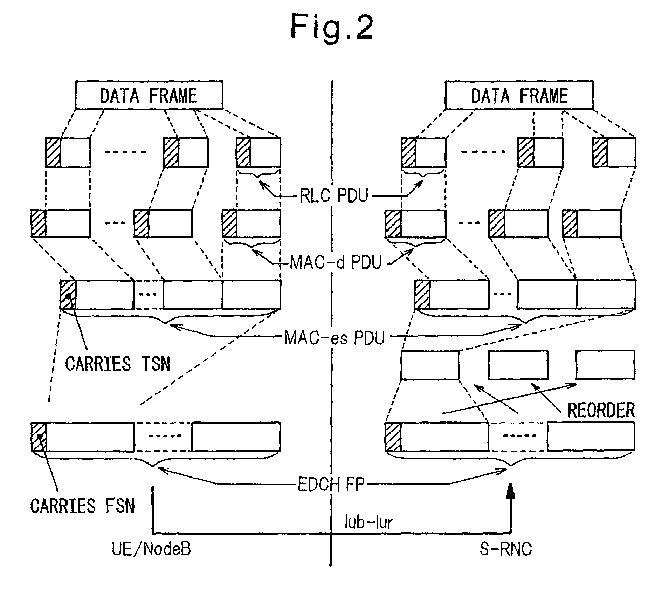

FIG. 2 is a diagram illustrating how a data frame is transferred between the mobile station, the base station, and the radio network controller. The mobile station divides the data frame to be transmitted over the network into shorter RLC PDUs (MAC-d PDUs). The mobile station creates a MAC-es PDU by multiplexing a plurality of MAC-d PDUs. The MAC-es PDU contains a TSN which is a sequence number indicating the order of each PDU in the data frame to be transmitted. The mobile station further creates an EDCH FP (Frame Protocol for Enhanced Dedicated Channel) frame by multiplexing a plurality of MAC-es PDUs.

The HSUPA scheme performs HARQ (Hybrid Automatic Repeat Request) control on a plurality of communication channels in order to enhance data transmission speeds. Therefore, it is not possible to predict which data on which communication channel will arrive at the base station earlier than the others i.e., the order of the data received at the base station is not guaranteed.

To address this, the base station assigns the sequence number TSN to each MAC-es PDU, and the radio network controller (S-RNC) reorders the MAC-es PDUs in accordance with their sequence numbers TSNs. The radio network controller (S-RNC) demultiplexes the MAC-es PDUs from the received EDCH FP frame, and reconstructs the data frame by reordering the MAC-es PDUs according to their TSNs.
Patent document 1: Japanese Unexamined Patent No. 2008-72452

### DISCLOSURE OF INVENTION

In the prior art, the radio network controller performs the reordering of the MAC-es PDUs, for example, in the following manner. The radio network controller retrieves the MAC-es PDUs from a receive buffer in the order in which they were received. If there is any data lost across the Uu interface, a discontinuity occurs in the sequence numbers of the data arriving at the radio network controller. Upon detecting a discontinuity in the sequence numbers of the data retrieved from the receive buffer, the radio network controller temporarily stores the data succeeding the lost data into a reordering buffer. When the lost data is thereafter recovered from the receive buffer, the radio network controller transmits the recovered data, together with its succeeding data held in the reordering buffer, onto the network in the order specified by their sequence numbers.

In the above-described prior art reordering process, the radio network controller has had to perform processing to transfer the data retrieved from the receive buffer into the reordering buffer. This has led to the problem that, in a situation where the reordering has to be performed frequently, the load of the processor that controls the radio network controller increases, causing a delay in processing, due to the processing for transferring the data into the reordering buffer.

In view of the above problem, an object of the packet transmitting apparatus, packet receiving apparatus, communication system, and packet communication method disclosed herein is to enhance the efficiency of the processing that the receiving apparatus that received packets having preassigned packet numbers performs to reorder the packets according to their sequence numbers.

A packet transmitting apparatus according to one embodiment includes: a packet transmitting unit which transmits a packet having a preassigned sequence number to a destination apparatus; a transmitted-packet indication information generating unit which generates transmitted-packet indication information that indicates the packet transmitted by the packet transmitting unit; and a transmitted-packet indication information transmitting unit which transmits the transmitted-packet indication information to the destination apparatus separately from the packet.

A packet receiving apparatus according to another embodiment includes: a packet receiving unit which receives a packet having a preassigned sequence number from a transmitting apparatus; a receive buffer which stores the received packet; a transmitted-packet indication information receiving unit which receives from the transmitting apparatus, separately from the packet, transmitted-packet indication information that indicates the packet transmitted by the transmitting apparatus; and a packet reordering unit which retrieves from the receive buffer the packet indicated by the transmitted-packet indication information, and which reorders the packet in accordance with the sequence number.

The transmitting apparatus transmits not only the packets but also the transmitted-packet indication information to the receiving apparatus, so that the receiving apparatus can determine, before retrieving the packets from the receive buffer, whether all the packets necessary for packet reordering have been received or not. Since the reordering of the packets can be performed without transferring the data into the reordering buffer, the load of the receiving apparatus for reordering the packet is reduced.

### BRIEF DESCRIPTION OF THE DRAWINGS

FIG. 1 is a diagram illustrating the layer structure at each node as defined in HSUPA.
FIG. 2 is a diagram illustrating how a data frame is transferred between a mobile station, a base station, and a radio network controller.
FIG. 3 is a diagram illustrating the configuration of a first example of a communication system disclosed herein.
FIG. 4 is a diagram illustrating a first example of the hardware configuration of a first packet transmitting/receiving apparatus depicted in FIG. 3.
FIG. 5 is a first example of a block diagram of the first packet transmitting/receiving apparatus depicted in FIG. 4.
FIG. 6 is a diagram illustrating the hardware configuration of a second packet transmitting/receiving apparatus depicted in FIG. 3.
FIG. 7 is a first example of a block diagram of the second packet transmitting/receiving apparatus depicted in FIG. 6.
FIG. 8 is a flowchart illustrating a first example of the processing performed by the first packet transmitting/receiving apparatus depicted in FIG. 4.
FIG. 9 is a diagram illustrating the frame format of transmitted-packet indication information.
FIG. 10 is a diagram illustrating the operation of the communication system depicted in FIG. 3.
FIG. 11 is a flowchart illustrating the receiving process performed by the second packet transmitting/receiving apparatus depicted in FIG. 6.
FIG. 12 is a flowchart (part 1) illustrating the reordering process performed by the second packet transmitting/receiving apparatus depicted in FIG. 6.
FIG. 13 is a flowchart (part 2) illustrating the reordering process performed by the second packet transmitting/receiving apparatus depicted in FIG. 6.
FIG. 14 is a flowchart illustrating a second example of the processing performed by the first packet transmitting/receiving apparatus depicted in FIG. 4.
FIG. 15 is a second example of a block diagram of the first packet transmitting/receiving apparatus depicted in FIG. 4.
FIG. 16 is a second example of a block diagram of the second packet transmitting/receiving apparatus depicted in FIG. 6.
FIG. 17 is a flowchart illustrating a third example of the processing performed by the first packet transmitting/receiving apparatus depicted in FIG. 4.
FIG. 18 is a third example of a block diagram of the first packet transmitting/receiving apparatus depicted in FIG. 4.
FIG. 19 is a flowchart illustrating a fourth example of the processing performed by the first packet transmitting/receiving apparatus depicted in FIG. 4.
FIG. 20 is a diagram illustrating a second example of the hardware configuration of the first packet transmitting/receiving apparatus 2 depicted in FIG. 3.
FIG. 21 is a block diagram of the first packet transmitting/receiving apparatus depicted in FIG. 20.
FIG. 22 is a flowchart illustrating an example of the processing performed by the first packet transmitting/receiving apparatus depicted in FIG. 20.
FIG. 23 is a diagram illustrating a second example of the configuration of the communication system disclosed herein.
FIG. 24 is a diagram illustrating the hardware configuration of a mobile station depicted in FIG. 23.
FIG. 25 is a diagram illustrating the hardware configuration of a base station depicted in FIG. 23.
FIG. 26 is a first example of a block diagram of the base station depicted in FIG. 25.
FIG. 27 is a diagram illustrating the hardware configuration of a radio network controller depicted in FIG. 23.
FIG. 28 is a block diagram of the radio network controller depicted in FIG. 27.
FIG. 29 is a diagram illustrating the reordering performed by using a reordering buffer.
FIG. 30 is a flowchart illustrating the processing performed by the base station depicted in FIG. 25.
FIG. 31 is a diagram illustrating a first example of the operation of the communication system depicted in FIG. 23.
FIG. 32 is a flowchart illustrating the receiving process performed by the radio network controller depicted in FIG. 27.
FIG. 33 is a flowchart (part 1) illustrating the reordering process performed by the radio network controller depicted in FIG. 27.
FIG. 34 is a flowchart (part 2) illustrating the reordering process performed by the radio network controller depicted in FIG. 27.
FIG. 35 is a block diagram of the mobile station depicted in FIG. 24.
FIG. 36 is a second example of a block diagram of the base station depicted in FIG. 25.
FIG. 37 is a flowchart illustrating the processing performed by the mobile station depicted in FIG. 24.
FIG. 38 is a diagram illustrating a second example of the operation of the communication system depicted in FIG. 23.
FIG. 39 is a flowchart illustrating the receiving process performed by the base station depicted in FIG. 25.
FIG. 40 is a flowchart (part 1) illustrating the reordering process performed by the base station depicted in FIG. 25.
FIG. 41 is a flowchart (part 2) illustrating the reordering process performed by the base station depicted in FIG. 25.

### DESCRIPTION OF THE REFERENCE NUMERALS

1, 100. COMMUNICATION SYSTEM
2. FIRST PACKET TRANSMITTING/RECEIVING APPARATUS
3. SECOND PACKET TRANSMITTING/RECEIVING APPARATUS
4. THIRD PACKET TRANSMITTING/RECEIVING APPARATUS
101. MOBILE STATION (UE)
102. BASE STATION (NodeB)
103. RADIO NETWORK CONTROLLER (RNC)
104. xGSN

### DESCRIPTION OF EMBODIMENTS

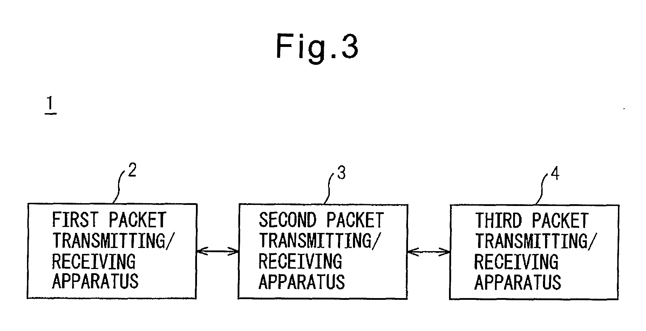

Embodiments will be described below with reference to the accompanying drawings. FIG. 3 is a diagram illustrating the configuration of a first example of a communication system disclosed herein. The communication system 1 includes a first packet transmitting/receiving apparatus 2, a second packet transmitting/receiving apparatus 3, and a third packet transmitting/receiving apparatus 4. The first and second transmitting/receiving apparatuses 2 and 3 may be a base station and a radio network controller, respectively, as will be described later in an alternative embodiment. Further, the first and second transmitting/receiving apparatuses 2 and 3 may be a mobile station and a base station, respectively, as will be described later in an alternative embodiment. That is, the first and second transmitting/receiving apparatuses 2 and 3 may be in a higher/lower order relationship. Alternatively, the first and second transmitting/receiving apparatuses 2 and 3 may both be base stations or radio network controllers. That is, the first and second transmitting/receiving apparatuses 2 and 3 may not be in a higher/lower order relationship.

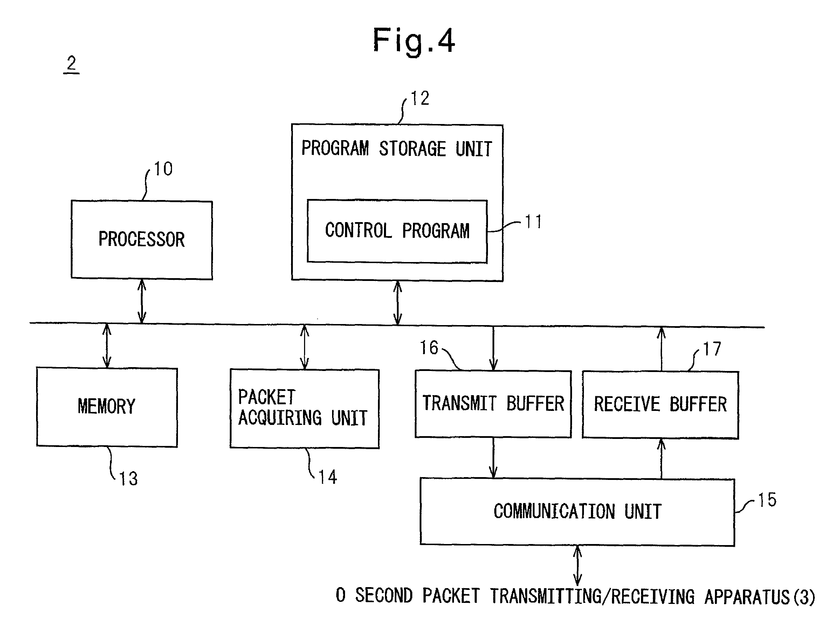

FIG. 4 is a diagram illustrating a first example of the hardware configuration of the first packet transmitting/receiving apparatus 2 depicted in FIG. 3. The first packet transmitting/receiving apparatus 2 includes a processor 10, a program storage unit 12 storing a control program 11, a memory 13, a packet acquiring unit 14, a communication unit 15, a transmit buffer 16, and a receive buffer 17.

The processor 10 is implemented using a data processor such as a CPU, and controls the operation of the first packet transmitting/receiving apparatus 2 by executing the control program 11 stored in the program storage unit 12. The program storage unit 12 may also store an application program which is executed by the processor 10 to generate user data. The memory 13 is used to store data necessary for the execution of the control program 11 and the application program, and is also used to store temporary data generated during the execution of such programs.

The packet acquiring unit 14 acquires packets to be transmitted from the first packet transmitting/receiving apparatus 2 to the second packet transmitting/receiving apparatus 3. Each packet that the packet acquiring unit 14 acquires is preassigned a sequence number that indicates the order of that packet. The sequence number may be embedded in each packet. The packet acquiring unit 14 may acquire packets, for example, by receiving the packets from some other communication apparatus. In this example, packet acquiring unit 14 may be implemented as a communication circuit. Further, the packet acquiring unit 14 may be implemented, for example, as a software module that acquires the packets into which the user data generated by the application program executed by the processor 10 has been divided. For example, packet acquiring unit 14 may be implemented as processor 10.

The communication unit 15 transmits and receives data to and from the second packet transmitting/receiving apparatus 3. For example, the communication unit 15 transmits the packets acquired by the packet acquiring unit 14 to the second packet transmitting/receiving apparatus 3. The transmit buffer 16 temporarily holds the data to be transmitted to the second packet transmitting/receiving apparatus 3, until the communication unit 15 accepts the data. The receive buffer 17 temporarily holds the data that the communication unit 15 received from the second packet transmitting/receiving apparatus 3.

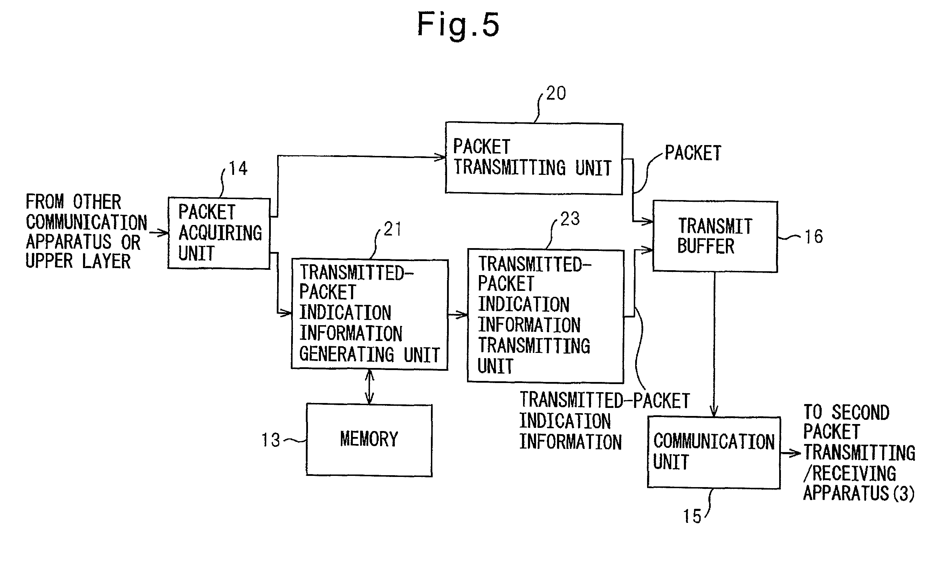

FIG. 5 is a first example of a block diagram of the first packet transmitting/receiving apparatus 2 depicted in FIG. 4. The functions of a packet transmitting unit 20, a transmitted-packet indication information generating unit 21, and a transmitted-packet indication information transmitting unit 23 are implemented by the processor 10 executing the control program 11 stored in the program storage unit 12.

The packet transmitting unit 20 performs processing to transmit the packets acquired by the packet acquiring unit 14 to the second packet transmitting/receiving apparatus 3. The packet transmitting unit 20 stores the packets in the transmit buffer 16 for transmission to the second packet transmitting/receiving apparatus 3, and the communication unit 15 transmits the packets stored in the transmit buffer 16 to the second packet transmitting/receiving apparatus 3.

The transmitted-packet indication information generating unit 21 takes as input the packets acquired by the packet acquiring unit 14. The transmitted-packet indication information generating unit 21 assumes that the packets received from the packet acquiring unit 14 are the packets transmitted from the packet transmitting unit 20, and generates transmitted-packet indication information that indicates the packets transmitted by the packet transmitting unit 20. The transmitted-packet indication information may identify the packets transmitted from the packet transmitting unit 20 by their sequence numbers.

For example, consider the case of indicating a series of packets having consecutive sequence numbers n, (n+1), (n+2), ..., and (n+x) for the case where the packets are transmitted in ascending order of their sequence numbers. In this case, the series of sequence numbers n, (n+1), (n+2), ..., and (n+x) arranged in the order of transmission of the packets may be defined as the transmitted-packet indication information. Alternatively, information (n:(n+x)) indicating the range of the sequence numbers of the packets may be defined as the transmitted-packet indication information.

The transmitted-packet indication information as used in the description of this specification is a set of sequence numbers which includes a series of sequence numbers obtained by arranging the sequence numbers of the packets transmitted from the packet transmitting unit 20 in the order in which the packets were transmitted. The transmitted-packet indication information generating unit 21 extracts the sequence number embedded in each packet acquired by the packet acquiring unit 14. The transmitted-packet indication information generating unit 21 stores the extracted sequence number in the memory 13.

As the sequence number of each packet is extracted, the transmitted-packet indication information generating unit 21 adds it to the series of sequence numbers so far stored in the memory 13, and thereby generates the series of sequence numbers arranged in the order of packet transmission. In accordance with transmit timing described later, the transmitted-packet indication information generating unit 21 retrieves the series of sequence numbers from the memory 13 and passes the transmitted-packet indication information containing the series of sequence numbers to the transmitted-packet indication information transmitting unit 23.

The transmitted-packet indication information transmitting unit 23 performs processing to transmit the transmitted-packet indication information generated by the transmitted-packet indication information generating unit 21 to the second packet transmitting/receiving apparatus 3. The transmitted-packet indication information transmitting unit 23 stores the transmitted-packet indication information in the transmit buffer 16, and the communication unit 15 transmits the transmitted-packet indication information stored in the transmit buffer 16 to the second packet transmitting/receiving apparatus 3.

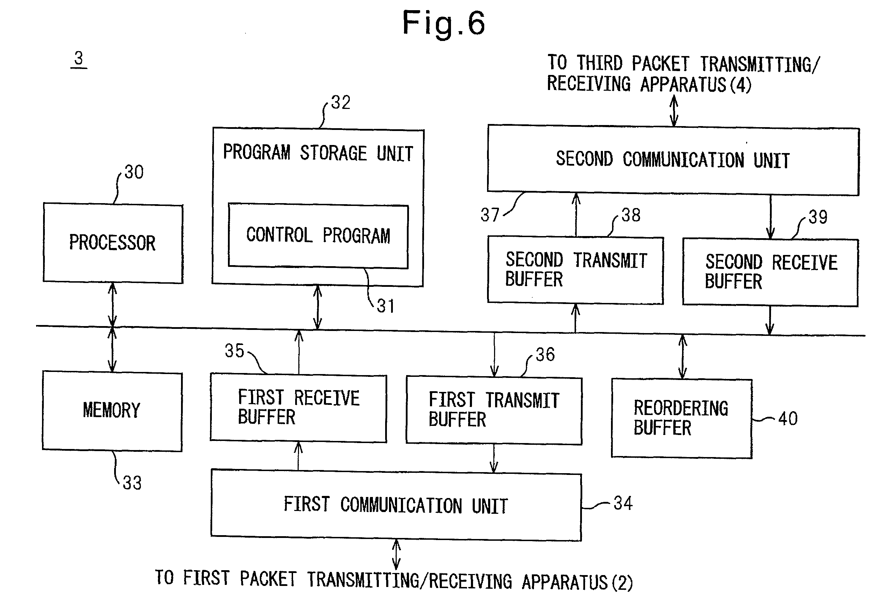

FIG. 6 is a diagram illustrating the hardware configuration of the second packet transmitting/receiving apparatus 3 depicted in FIG. 3. The second packet transmitting/receiving apparatus 3 includes a processor 30, a program storage unit 32 storing a control program 31, a memory 33, a first communication unit 34, a first receive buffer 35, and a first transmit buffer 36. The second packet transmitting/receiving apparatus 3 further includes a second communication unit 37, a second transmit buffer 38, a second receive buffer 39, and a reordering buffer 40.

The processor 30 is implemented using a data processor such as a CPU, and controls the operation of the second packet transmitting/receiving apparatus 3 by executing the control program 31 stored in the program storage unit 32. The memory 33 is used to store data necessary for the execution of the control program 31, etc., and is also used to store temporary data generated during the execution of such programs.

The first communication unit 34 transmits and receives data to and from the first packet transmitting/receiving apparatus 2. For example, the first communication unit 34 receives the packets transmitted from the first packet transmitting/receiving apparatus 2. Further, the first communication unit 34, for example, receives the transmitted-packet indication information transmitted from the first packet transmitting/receiving apparatus 2.

The first receive buffer 35 temporarily holds the data that the first communication unit 34 received from the first packet transmitting/receiving apparatus 2. The first transmit buffer 36 temporarily holds the data transmitted from the second packet transmitting/receiving apparatus 3 to the first packet transmitting/receiving apparatus 2, until the first communication unit 34 accepts the data.

The second communication unit 37 transmits and receives data to and from the third packet transmitting/receiving apparatus 4. For example, the second communication unit 37 transmits the packets received from the first packet transmitting/receiving apparatus 2 on to the third packet transmitting/receiving apparatus 4 after reordering the packets in the order of their sequence numbers in the reordering process performed by the processor 30, as will be described hereinafter. The second receive buffer 39 temporarily holds the data that the second communication unit 37 received from the third packet transmitting/receiving apparatus 4. The second transmit buffer 38 temporarily holds the data to be transmitted from the second packet transmitting/receiving apparatus 3 to the third packet transmitting/receiving apparatus 4, until the second communication unit 37 accepts the data.

The reordering buffer 40 is a buffer used for saving the packets from the first receive buffer 35, as necessary, when performing the reordering of the packets received from the first packet transmitting/receiving apparatus 2.

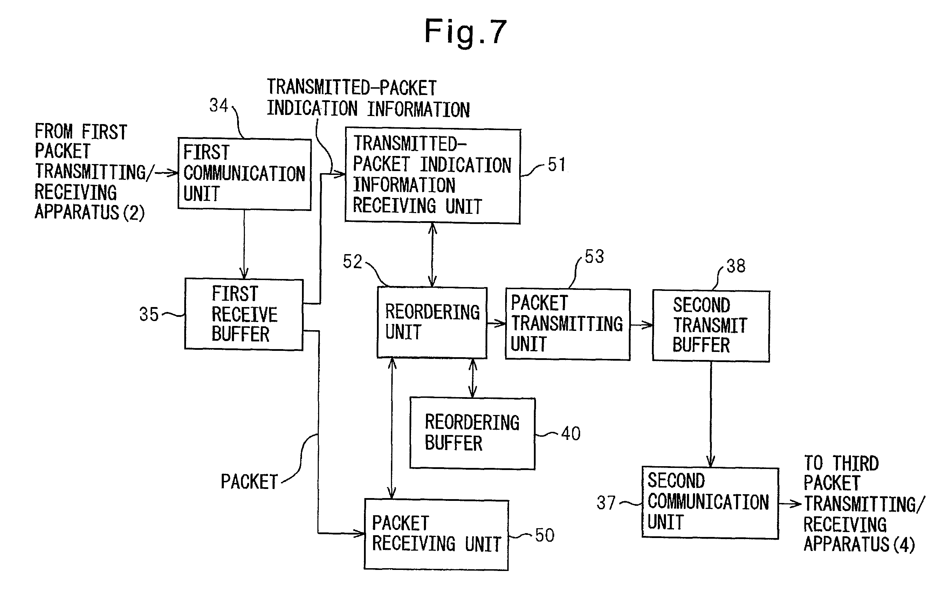

FIG. 7 is a first example of a block diagram of the second packet transmitting/receiving apparatus 3 depicted in FIG. 6. The functions of a packet receiving unit 50, a transmitted-packet indication information receiving unit 51, a reordering unit 52, and a packet transmitting unit 53 are implemented by the processor 30 executing the control program 31 stored in the program storage unit 32.

The packet receiving unit 50 performs processing to receive the packets received by the first communication unit 34 and held in the first receive buffer 35. The transmitted-packet indication information receiving unit 51 performs processing to receive the transmitted-packet indication information received by the first communication unit 34 and held in the first receive buffer 35.

The reordering unit 52 performs processing to reorder the packets received from the first packet transmitting/receiving apparatus 2 according to their sequence numbers. During the reordering, the reordering unit 52 saves the packets retrieved from the first receive buffer 35, as necessary, into the reordering buffer 40. The packet transmitting unit 53 performs processing to transmit the packets to the third packet transmitting/receiving apparatus 4 in the order rearranged by the reordering unit 52. The packet transmitting unit 53 stores the packets in the second transmit buffer 38 for transmission to the third packet transmitting/receiving apparatus 4, and the second communication unit 37 transmits the packets stored in the second transmit buffer 38 to the third packet transmitting/receiving apparatus 4.

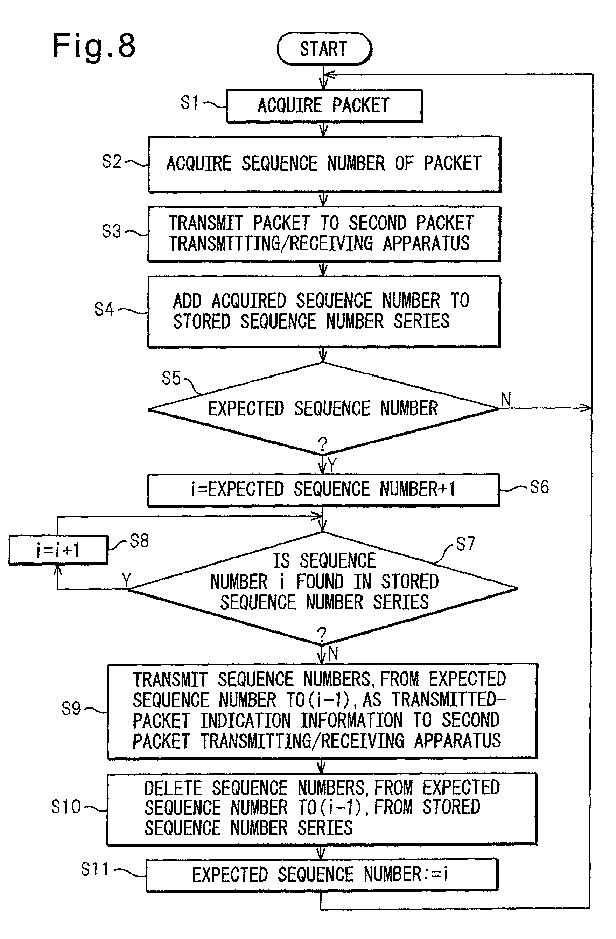

FIG. 8 is a flowchart illustrating a first example of the processing performed by the first packet transmitting/receiving apparatus 2 depicted in FIG. 4. In step S1, the packet acquiring unit 14 acquires a packet to be transmitted from the first packet transmitting/receiving apparatus 2 to the second packet transmitting/receiving apparatus 3. The packet acquired here may be a packet that carries user data received from some other communication apparatus or a packet that carries user data generated by the application program executed by the processor 10.

In step S2, the transmitted-packet indication information generating unit 21 acquires the sequence number embedded in the packet acquired in step S1. In step S3, the packet transmitting unit 20 transmits the packet acquired in step S1 to the second packet transmitting/receiving apparatus 3.

In step S4, the transmitted-packet indication information generating unit 21 stores the sequence number acquired in step S2 into the memory 13. If the sequence number of any previously received packet is already stored in the memory 13, the transmitted-packet indication information generating unit 21 adds the acquired sequence number immediately after the sequence number already stored in the memory 13.

In step S5, the transmitted-packet indication information generating unit 21 determines whether the sequence number acquired in step S2 is the expected sequence number or not. In the packet transmission processing performed by the first packet transmitting/receiving apparatus 2, the "expected sequence number" refers to the sequence number that comes first in the transmission order among the sequence numbers of the packets yet to be transmitted. In the present embodiment, it is assumed that the transmission order is in ascending order of the sequence numbers. In this case, the "expected sequence number" refers to the smallest sequence number among the sequence numbers of the packets yet to be transmitted. If, for any reason, the packets are not transmitted in ascending order of the sequence numbers, resulting in the occurrence of a packet overtaken by a packet expected to follow it, then the expected sequence number refers to the smallest sequence number among the sequence numbers of such overtaken packets.

If it is determined in step S5 that the sequence number acquired in step S2 is not the expected sequence number (N in step S5), the processor 10 returns the process to step S1. By repeating the process from steps S1 to S5, the transmitted-packet indication information generating unit 21 successively stores in the memory 13 the sequence numbers of the transmitted packets having sequence numbers succeeding the expected sequence number.

If it is determined in step S5 that the sequence number acquired in step S2 is the expected sequence number (Y in step S5), then in step S6 the transmitted-packet indication information generating unit 21 sets the value of index variable i to (the expected sequence number + 1). In steps S7 and S8, the transmitted-packet indication information generating unit 21 searches for the smallest expected sequence number not stored in the memory 13. More specifically, in step S7, the transmitted-packet indication information generating unit 21 determines whether or not the sequence number equal to the value of index variable i is stored in the memory 13. As long as the sequence number equal to the value of index variable i is stored in the memory 13 (Y in step S7), the transmitted-packet indication information generating unit 21 increments the value of index variable i by 1 in step S8, and repeats the steps S7 and S8.

If the smallest expected sequence number not stored in the memory 13 is found (N in step S7), the transmitted-packet indication information generating unit 21 proceeds to step S9 to generate the transmitted-packet indication information that carries the consecutive sequence numbers starting from the expected sequence number and continuing up to (i-1).

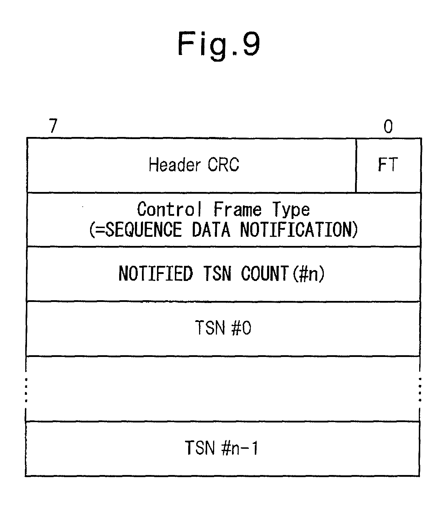

FIG. 9 is a diagram illustrating the frame format of the transmitted-packet indication information. The transmitted-packet indication information includes a header (header CRC), an FT field, a Control Frame Type field, a notified TSN count field, and one or more TSN fields TSN#0 to TSN#(n-1). The value of the FT field indicates whether this frame is a control frame or a data frame. The value of the Control Frame Type field indicates that this frame carries the transmitted-packet indication information notifying the delivery of sequence data. The value of the notified TSN count field indicates the total number of sequence numbers notified by the transmitted-packet indication information. The TSN fields TSN#0 to TSN#(n-1) respectively store the sequence numbers. The transmitted-packet indication information transmitting unit 23 transmits the transmitted-packet indication information to the second packet transmitting/receiving apparatus 3.

In step S10 of FIG. 8, the transmitted-packet indication information generating unit 21 deletes from the memory 13 the consecutive sequence numbers starting from the expected sequence number and continuing up to (i-1). In step S11, the transmitted-packet indication information generating unit 21 updates the value of the expected sequence number to the value of index variable i. After that, the processor 10 returns the process to step S1.

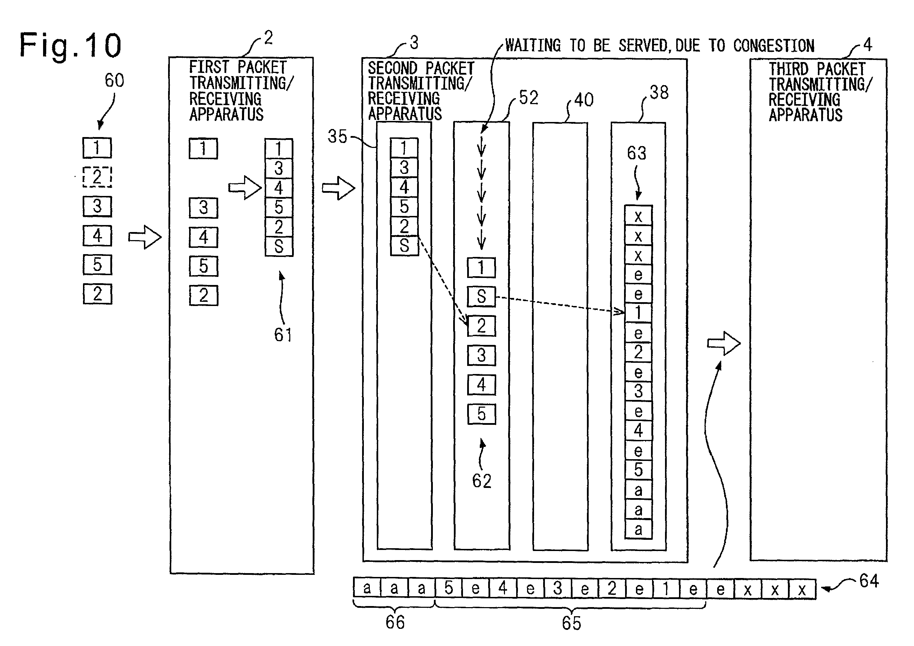

FIG. 10 is a diagram illustrating the operation of the communication system 1 depicted in FIG. 3. In the figure, the packets carrying the user data are indicated by square boxes in which values "1" to "5" are respectively contained; the value in each square box indicates the packet number of the corresponding packet. The transmitted-packet indication information is indicated by a square box containing a character "S".

The first packet transmitting/receiving apparatus 2 sequentially acquires the packets having the sequence numbers "1" to "5", as indicated at reference numeral 60 (step S1 in FIG. 8). Consider the case where the acquisition of the packet of sequence number "2" by the first packet transmitting/receiving apparatus 2 is delayed for some reason and, after receiving the packet of sequence number "5", the packet of sequence number "2" is acquired. In this case, the packets are transmitted to the second packet transmitting/receiving apparatus 3 in the order of the sequence numbers "1", "3", "4", "5", and "2" (step S3).

In the loop of steps S1 to S5, the value of the expected sequence number is "2" because of the failure of acquisition of the packet of sequence number "2". As a result, the sequence numbers "3", "4", and "5" are held in the memory 13 until the first packet transmitting/receiving apparatus 2 acquires the packet of sequence number "2".

When the first packet transmitting/receiving apparatus 2 acquires the packet of sequence number "2" (Y in step S5), the transmitted-packet indication information generating unit 21 generates the transmitted-packet indication information S that carries the sequence numbers "2" to "5" (step S9). The transmitted-packet indication information S may include the sequence numbers "2" to "5" arranged in the order in which the packets are transmitted. For example, in the illustrated example, the sequence numbers "2" to "5" stored in the transmitted-packet indication information S are arranged in the order of "3", "4", "5", and "2".

Reference number 61 indicates how the transmitted-packet indication information S is transmitted to the second packet transmitting/receiving apparatus 3 after the packet of sequence number "2".

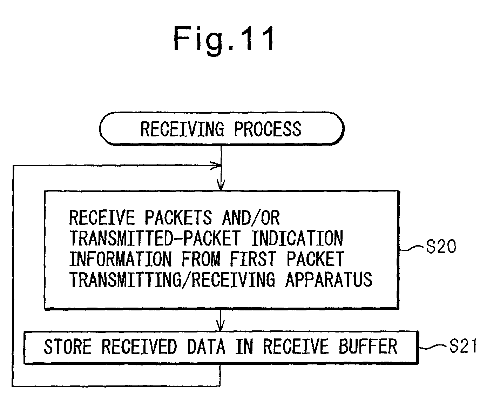

FIG. 11 is a flowchart illustrating the receiving process performed by the second packet transmitting/receiving apparatus 3 depicted in FIG. 6. In step S20, the first communication unit 34 in the second packet transmitting/receiving apparatus 3 receives the packets and/or transmitted-packet indication information transmitted from the first packet transmitting/receiving apparatus 2. In step S21, the first communication unit 34 stores the data received in step S20 into the first receive buffer 35 in the order in which they were received. By repeating steps S20 and S21, the second packet transmitting/receiving apparatus 3 successively stores the data received from the first packet transmitting/receiving apparatus 2 into the first receive buffer 35.

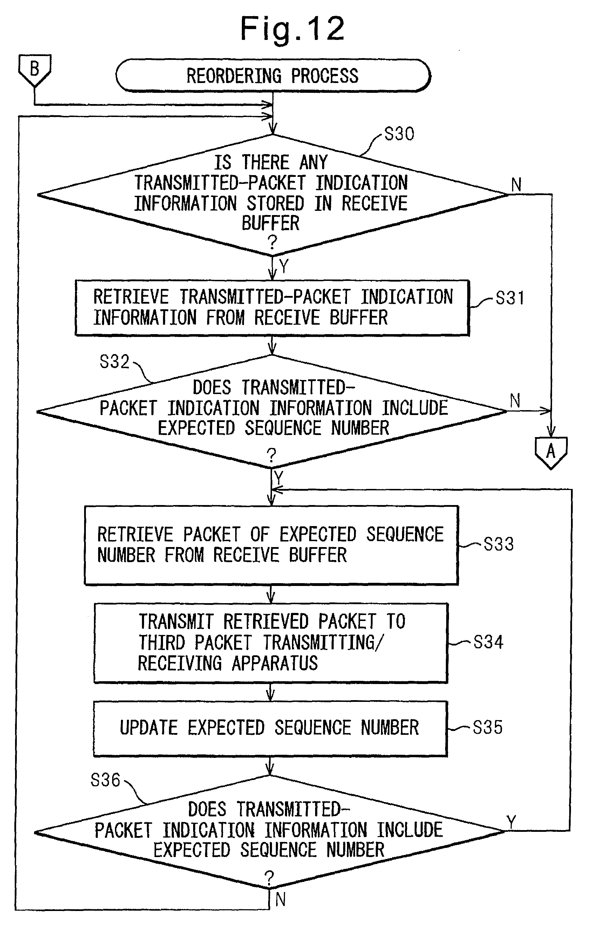

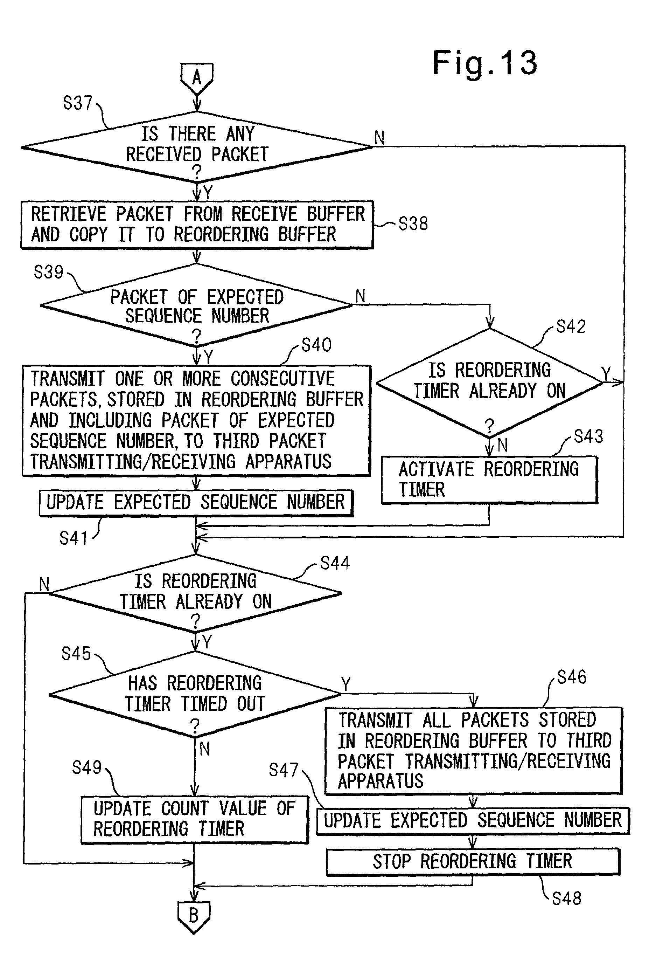

The packets received from the first packet transmitting/receiving apparatus 2 and stored in the first receive buffer 35 are first reordered according to their sequence numbers by the reordering unit 52 depicted in FIG. 7 and then transmitted on to the third packet transmitting/receiving apparatus 4. FIGS. 12 and 13 are a flowchart illustrating the reordering process performed by the second packet transmitting/receiving apparatus 3 depicted in FIG. 6.

In step S30, the reordering unit 52 determines whether there is any transmitted-packet indication information stored in the first receive buffer 35. If there is no transmitted-packet indication information stored in the first receive buffer 35 (N in step S30), the reordering unit 52 transfers the process to step S37 (as indicated by reference character A). If there is any transmitted-packet indication information stored in the first receive buffer 35 (Y in step S30), the reordering unit 52 transfers the process to step S31.

In step S31, the reordering unit 52 retrieves the transmitted-packet indication information from the first receive buffer 35. In step S32, the reordering unit 52 determines whether the sequence numbers indicated by the transmitted-packet indication information include the expected sequence number.

In the processing performed by the second packet transmitting/receiving apparatus 3 to receive packets from the first packet transmitting/receiving apparatus 2, the "expected sequence number" refers to the sequence number of the packet whose sequence number is the smallest among the packets yet to be transmitted and whose succeeding packets also have yet to be reordered by the reordering unit 52.

If the expected sequence number is not included in the sequence numbers indicated by the transmitted-packet indication information (N in step S32), the reordering unit 52 transfers the process to step S37 (as indicated by reference character A). If the expected sequence number is included in the sequence numbers indicated by the transmitted-packet indication information (Y in step S32), the reordering unit 52 transfers the process to step S33.

In step S33, the packet receiving unit 50 retrieves the packet having the expected sequence number from the first receive buffer 35. In step S34, the packet transmitting unit 53 transmits the packets retrieved in step S33 to the third packet transmitting/receiving apparatus 4. In step S35, the reordering unit 52 updates the expected sequence number by incrementing the expected sequence number by 1.

In step S36, the reordering unit 52 determines whether the sequence numbers indicated by the transmitted-packet indication information include the updated expected sequence number. If the updated expected sequence number is included in the sequence numbers indicated by the transmitted-packet indication information (Y in step S36), the reordering unit 52 returns the process to step S33.

Thus, the processor 30 repeats the process from steps S33 to S36, as long as the expected sequence number incremented by 1 in step S35 is included in the transmitted-packet indication information. As a result, the processor 30 can transmit the packets of consecutive sequence numbers to the third packet transmitting/receiving apparatus 4 by retrieving the packets from the first receive buffer 35 according to their sequence numbers. That is, by retrieving the packets from the first receive buffer 35 according to their sequence numbers, the reordering unit 52 can accomplish the reordering without using the reordering buffer.

If the updated expected sequence number is not included in the sequence numbers indicated by the transmitted-packet indication information (N in step S36), the processor 30 returns the process to step S30.

In step S37, the reordering unit 52 determines whether there is any received packet stored in the first receive buffer 35. If there is any received packet stored (Y in step S37), the reordering unit 52 transfers the process to step S38. If there is no received packet (N in step S37), the reordering unit 52 transfers the process to step S44.

In step S38, the packet receiving unit 50 retrieves the packet from the first receive buffer 35, and the reordering unit 52 copies the retrieved packet to the reordering buffer 40, thereby saving the packet from the first receive buffer 35 into the reordering buffer 40. If there is any packet already stored in the reordering buffer 40, the reordering unit 52 stores the retrieved packet to add to the already stored packet.

In step S39, the reordering unit 52 identifies whether or not the sequence number of the packet saved to the reordering buffer 40 in step S38 is identical with the expected sequence number. If the sequence number of the saved packet is identical to the expected sequence number (Y in step S39), the reordering unit 52 transfers the process to step S40.

In step S40, the reordering unit 52 transmits one or more consecutive packets, including the packet of the expected sequence number, to the third packet transmitting/receiving apparatus 4 by taking them from among the packets stored in the reordering buffer 40. In step S41, the reordering unit 52 updates the value of the expected sequence number to (the largest sequence number among the packets transmitted in S40 + 1).

If it is determined in step S39 that the sequence number of the saved packet is not the expected sequence number (N in step S39), the reordering unit 52 transfers the process to step S42. In step S42, the reordering unit 52 checks to determine if a reordering timer is already ON or not. The reordering timer here may be, for example, a software timer implemented by the processing of the processor 30. The counting of the time by the reordering timer is started when a packet having a sequence number other than the expected sequence number is saved to the reordering buffer 40 that is empty. The reordering timer is a timer used to cause the packets successively stored in the reordering buffer 40 to be transmitted to the third packet transmitting/receiving apparatus 4 when a predetermined time has elapsed after saving the first packet to the reordering buffer 40.

If it is determined in step S42 that the reordering timer is not ON (N in step S42), the reordering unit 52 transfers the process to step S43. In step S43, the reordering unit 52 activates the reordering timer, thus starting the counting of the time by the reordering timer. After that, the reordering unit 52 transfers the process to step S44. If it is determined in step S42 that the reordering timer is already ON (Y in step S42), the reordering unit 52 transfers the process to step S44.

In step S44, the reordering unit 52 checks to determine if the reordering timer is already ON or not. If the reordering timer is not ON (N in step S44), the processor 30 returns the process to step S30 (as indicated by reference character B). If the reordering timer is already ON (Y in step S44), the reordering unit 52 transfers the process to step S45.

In step S45, the reordering unit 52 determines whether the time counted by the reordering timer has exceeded the predetermined time, that is, whether the reordering timer has timed out. When the reordering timer has timed out (Y in step S45), the reordering unit 52 transfers the process to step S46.

In step S46, the reordering unit 52 transmits all the packets stored in the reordering buffer 40 to the third packet transmitting/receiving apparatus 4. In step S47, the reordering unit 52 updates the value of the expected sequence number to (the largest sequence number among the packets transmitted in S46 + 1). In step S48, the reordering unit 52 stops the reordering timer. After that, the processor 30 returns the process to step S30 (as indicated by reference character B).

If it is determined in step S45 that the reordering timer has not yet timed out (N in step S45), the reordering unit 52 transfers the process to step S49. In step S49, the reordering unit 52 updates the count value of the reordering timer by incrementing the count value by a predetermined time step. After that, the processor 30 returns the process to step S30 (as indicated by reference character B).

Referring back to FIG. 10, the receiving process performed by the second packet transmitting/receiving apparatus 3 will be described below. As described earlier, after transmitting the packets in the order of the sequence numbers "1", "3", "4", "5", and "2", the first packet transmitting/receiving apparatus 2 transmits out the transmitted-packet indication information S that carries the sequence numbers "2" to "5". The second packet transmitting/receiving apparatus 3 stores the received packets in the first receive buffer 35 in the order in which they were received, that is, in the order of the sequence numbers "1", "3", "4", "5", and "2", after which the transmitted-packet indication information S is stored. The sequence numbers "2" to "5" stored in the transmitted-packet indication information S are arranged in the order of "3", "4", "5", and "2".

If the second packet transmitting/receiving apparatus 3 is congested, for example, the processor 30 may not be able to immediately start the processing of the received packets even when the packets are stored in the first receive buffer 35. In such cases, if the packets are not transmitted in the order specified by their sequence number, and a certain packet is transmitted later than its succeeding packet, the reception of that certain packet may be completed before the turn to process that packet comes. For example, in FIG. 10, the reordering unit 52 in the second packet transmitting/receiving apparatus 3 starts the processing of the sequence number "1" only after its succeeding packets of sequence numbers "2" to "5" and the transmitted-packet indication information S have been received.

FIG. 10 illustrates the condition in which the reordering buffer 40 is empty. Such a situation occurs when the process does not proceed to step S37 and beyond in FIG. 13 and no packet is therefore saved in the reordering buffer 40. In this case, the sequence number of the packet retrieved from the first receive buffer 35 is identical with the expected sequence number, so that the reordering unit 52 repeats the process from steps S30 to S36 in FIG. 12. Accordingly, when the reordering unit 52 retrieves the transmitted-packet indication information S from the first receive buffer 35 after the packet of sequence number "1", the expected sequence number is "2".

By referring to the transmitted-packet indication information S (step S31 in FIG. 12), the reordering unit 52 can recognize that the packet of the expected sequence number "2" and its succeeding packets of the consecutive sequence numbers "3" to "5" are stored in the first receive buffer 35. Therefore, in steps S33 to S36, the reordering unit 52 can retrieve the packets of the consecutive sequence numbers "2" to "5" from the first receive buffer 35 in the order of the sequence numbers.

The reordering unit 52 causes the packet transmitting unit 53 to transmit the packets in the same order in which they were retrieved from the first receive buffer 35. The second transmit buffer 38 stores the packets waiting for their turns to be transmitted. As indicated at reference numeral 63, the packets are stored in the second transmit buffer 38 in the order of the sequence numbers. The square boxes indicated in reference numeral 63 designate storage locations within the second transmit buffer 38. In the figure, the data stored in the square boxes located at higher positions are earlier in the transmission order than those located at lower positions.

In the figure, the number written in each square box indicates the sequence number of the packet stored therein. The character "x" indicates that a preceding packet is stored, and the character "e" indicates an empty storage location, while the character "a" indicates a storage location available for storage of a packet succeeding the packets of sequence numbers "2"' to "5".

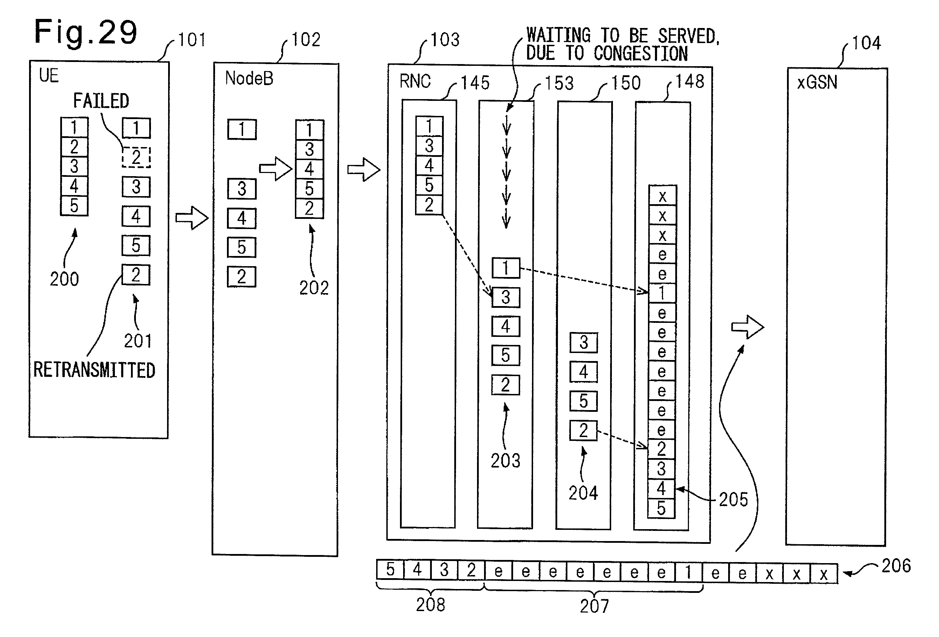

The square boxes indicated at reference numeral 64 provide a time chart of the packets to be transmitted from the second packet transmitting/receiving apparatus 3 to the third packet transmitting/receiving apparatus 4. In the figure, the data stored in the square boxes located toward the right are earlier in the transmission order than those located toward the left. In the figure, the number written in each square box indicates the sequence number of the packet stored therein. The character "x" indicates a preceding packet, and the character "e" indicates an empty time slot, while the character "a" indicates a time slot available for storage of a packet succeeding the packets of sequence numbers "2" to "5". The notation used in FIG. 10 is also applicable to FIGS. 29, 31, and 38.

In steps S33 to S36, the reordering unit 52 performs the reordering of the packets without saving them to the reordering buffer 40. In this case, the reordering unit 52 can retrieve the packets from the first receive buffer 35 in the order of the sequence numbers. That is, even when a packet having an earlier sequence number is received later than a packet having a later sequence number, the packet having the earlier sequence number can be retrieved earlier than the latter from the first receive buffer 35 for transmission.

On the other hand, in the case of the reordering process that uses the reordering buffer 40, the packets are retrieved from the first receive buffer 35 in the same order in which they were received. Here, if the order of the reception does not match the order of the sequence numbers, the transmission of the packets has to be held off until after all the succeeding packets received before the packet of the earlier sequence number have been saved to the reordering buffer 40.

The reordering process from steps S33 to S36 can eliminate the packet transmission delay that occurs in the case of the reordering performed using the reordering buffer 40 as described above. Reference numeral 66 in FIG. 10 indicates that the number of available time slots can be increased by reducing the transmission delay of the packets of sequence numbers "2" to "5".

Further, in the case of the reordering that uses the reordering buffer 40, when the packet of the expected sequence number is retrieved from the first receive buffer 35, all the packets saved in the reordering buffer 40 are transmitted to the third packet transmitting/receiving apparatus 4 in a bursty manner. This causes a transmission burst, increasing the load on the third packet transmitting/receiving apparatus 4. If the third packet transmitting/receiving apparatus 4 is equipped with a guard means that involves shaping, the transmission burst can cause a data dropout. Thus, the reordering using the reordering buffer 40 can become a factor that reduces the communication throughput of the communication system 1.

In contrast, in the process from steps S33 to S36, the reordering unit 52 performs the packet retrieval from the first receive buffer 35 and the packet transmission in alternating fashion. Since the process that performs the packet retrieval and packet transmission in alternating fashion is equivalent to the process that does not involve reordering, the transmission interval between successive packets does not greatly differ compared with the process that does not involve reordering. Accordingly, the reordering process performed in steps S33 to S36 can prevent the occurrence of a transmission burst. Reference numeral 65 in FIG. 10 indicates that the transmission interval between the respective packets of sequence numbers "1" to "5" is maintained constant, preventing the occurrence of a transmission burst.

If the sequence numbers carried in the transmitted-packet indication information are arranged in the same order as the packet transmission order, the reordering unit 52 can determine from the transmitted-packet indication information the order in which the packets are stored in the first receive buffer 35. In this case, the reordering unit 52 can retrieve the packet of any desired sequence number from the first receive buffer 35 without referring to the sequence number embedded in that packet.

In the case of the reordering process using the reordering buffer, since the packets as user data, for example, are first stored in the receive buffer, and then the stored packets are copied to the reordering buffer, the processing load of the processor in the receiving apparatus increases. This can cause a delay in the processing of the user data or can lead to a failure of the data transmission function due to overload of the processor in the receiving apparatus.

According to the communication system 1 of the present embodiment, when the processing in the second packet transmitting/receiving apparatus 3 is delayed, and a large amount of packets is stored in the first receive buffer 35, the transmitted-packet indication information is also stored in the first receive buffer 35 together with the packets. Accordingly, when retrieving the packets from the first receive buffer 35, the second packet transmitting/receiving apparatus 3 can reorder the packets by referring to the transmitted-packet indication information. Since the overloading of the processor 30 due to the use of the reordering buffer can thus be eliminated, the above-noted problems such as the processing delay of the user data and the failure of the data transmission function can be resolved.

Furthermore, according to the communication system 1 of the present embodiment, bursty transmission of data from the second packet transmitting/receiving apparatus 3 can be prevented. As a result, the present embodiment can eliminate such problems as the occurrence of a functional failure of the communication system 1 due to communication bursts and dropouts of user data due to shaping.

In HSUPA service, the transmission power may be reduced during radio communication between the mobile and base stations for efficient utilization of the radio resources. When this happens, the HARQ retransmission rate increases, increasing the chance of mismatch between the order of the sequence numbers and the order of the reception and thus increasing the processing load for the reordering of the user data at the radio network controller. The reordering process according to the present embodiment contributes to reducing the processing load for the reordering of the user data at the radio network controller.

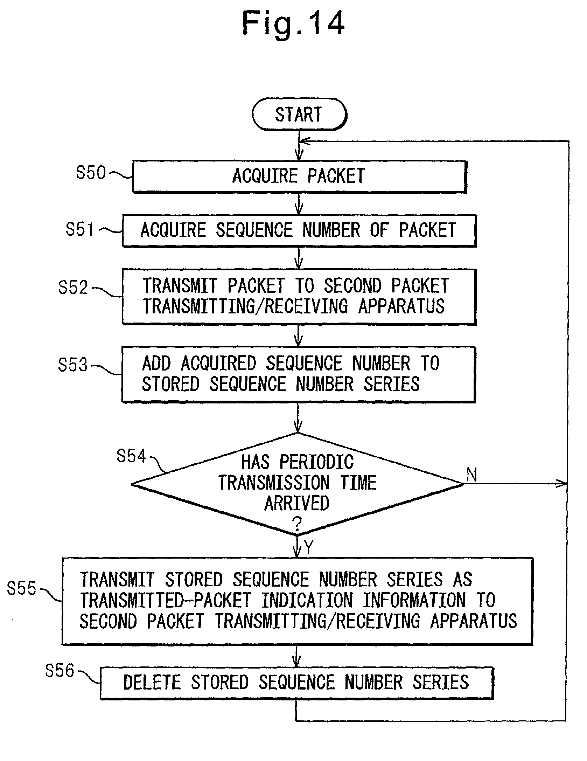

FIG. 14 is a flowchart illustrating a second example of the processing performed by the first packet transmitting/receiving apparatus 2 depicted in FIG. 4. The first packet transmitting/receiving apparatus 2 according to this embodiment transmits the transmitted-packet indication information to the second packet transmitting/receiving apparatus 3 at periodic intervals of time. During each periodic transmission interval, the first packet transmitting/receiving apparatus 2 sequentially stores the sequence numbers of the acquired packets into the memory 13. Each time the periodic transmission time comes, the first packet transmitting/receiving apparatus 2 transmits the transmitted-packet indication information, including the sequence numbers stored in the memory 13, to the second packet transmitting/receiving apparatus 3. The detailed processing will be described with reference to FIG. 14.

In step S50, the packet acquiring unit 14 acquires a packet, as in step S1 depicted in FIG. 8. In step S51, the transmitted-packet indication information generating unit 21 acquires the sequence number embedded in the packet acquired in step S50. In step S52, the packet transmitting unit 20 transmits the packet acquired in step S50 to the second packet transmitting/receiving apparatus 3. In step S53, as in step S4 depicted in FIG. 8, the transmitted-packet indication information generating unit 21 stores the sequence number acquired in step S51 into the memory 13.

In step S54, the transmitted-packet indication information generating unit 21 determines whether the current time is the periodic transmission time for transmitting the transmitted-packet indication information. If the current time is not the periodic transmission time (N in step S54), the processor 10 returns the process to step S50. By repeating the process from steps S50 to S54 during each periodic interval, the transmitted-packet indication information generating unit 21 successively stores the sequence numbers of the transmitted packets in the memory 13.

If the current time is the periodic transmission time (Y in step S54), the transmitted-packet indication information generating unit 21 generates in step S55 the transmitted-packet indication information that carries all the sequence numbers stored in the memory 13. The transmitted-packet indication information transmitting unit 23 transmits the transmitted-packet indication information to the second packet transmitting/receiving apparatus 3. In step S56, the transmitted-packet indication information generating unit 21 deletes the sequence numbers stored in the memory 13. After that, the processor 10 returns the process to step S50.

According to the present embodiment, the transmitted-packet indication information generating unit 21 can create the transmitted-packet indication information by a relatively simple process of periodically gathering the sequence numbers. Accordingly, the present embodiment can be implemented without imposing a large load on the processor 10 in the first packet transmitting/receiving apparatus 2.

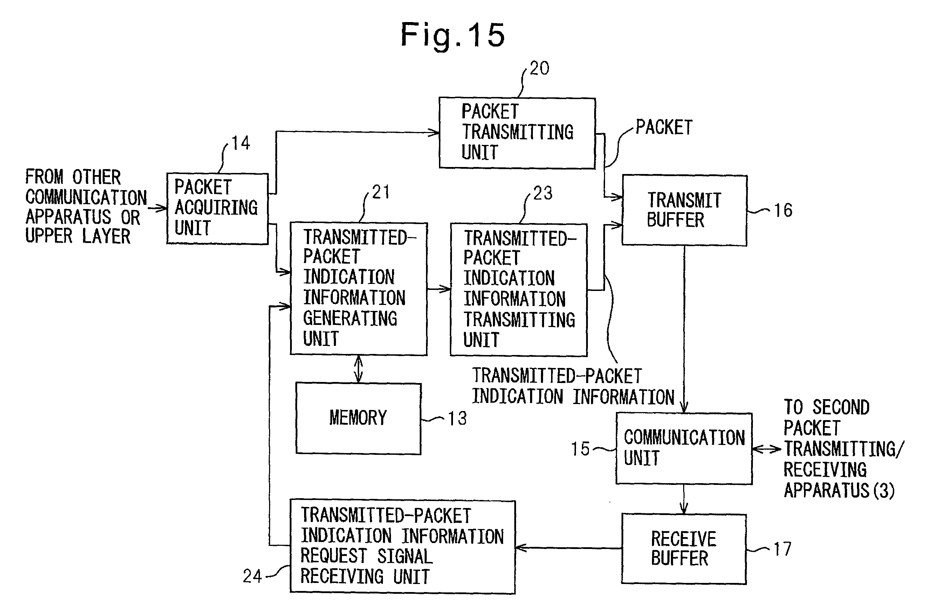

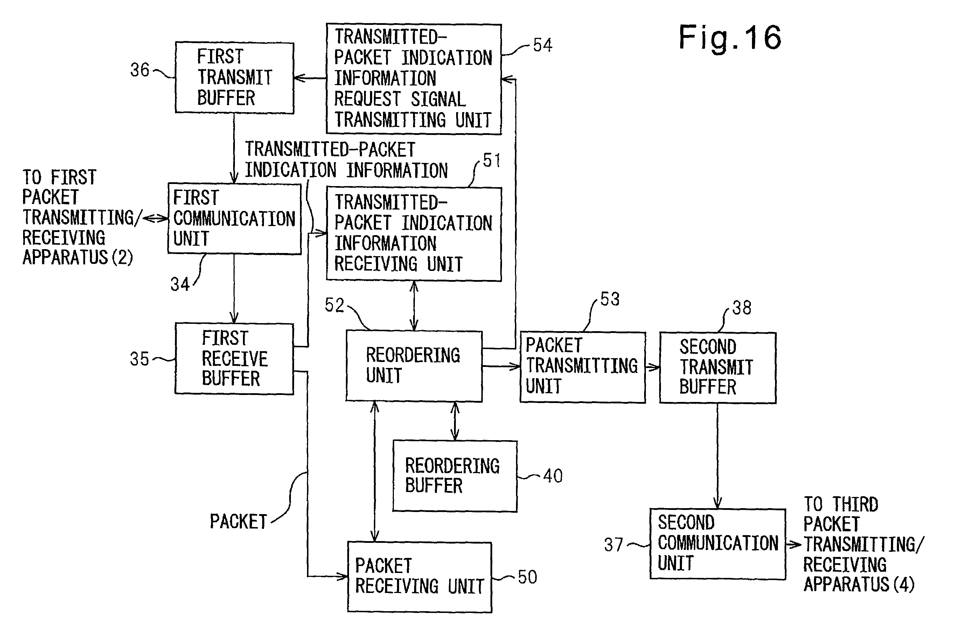

FIG. 15 is a second example of a block diagram of the first packet transmitting/receiving apparatus 2 depicted in FIG. 4, and FIG. 16 is a second example of a block diagram of the second packet transmitting/receiving apparatus 3 depicted in FIG. 6. In this embodiment, the first packet transmitting/receiving apparatus 2 transmits the transmitted-packet indication information to the second packet transmitting/receiving apparatus 3 at the request of the second packet transmitting/receiving apparatus 3.

Of the component elements depicted in FIG. 15, the same component elements as those depicted in FIG. 5 are designated by the same reference numerals. The function of a transmitted-packet indication information request signal receiving unit 24 is implemented by the processor 10 of FIG. 4 by executing the control program 11 stored in the program storage unit 12.

Of the component elements depicted in FIG. 16, the same component elements as those depicted in FIG. 7 are designated by the same reference numerals. The function of a transmitted-packet indication information request signal transmitting unit 54 is implemented by the processor 30 of FIG. 6 by executing the control program 31 stored in the program storage unit 32.

The transmitted-packet indication information request signal transmitting unit 54 creates a transmitted-packet indication information request signal for requesting the transmission of the transmitted-packet indication information from the first packet transmitting/receiving apparatus 2, and transmits the request signal to the first packet transmitting/receiving apparatus 2. For example, the transmitted-packet indication information request signal transmitting unit 54 may transmit the transmitted-packet indication information request signal to the first packet transmitting/receiving apparatus 2 at periodic intervals of time.

Alternatively, the transmitted-packet indication information request signal transmitting unit 54 may transmit the transmitted-packet indication information request signal to the first packet transmitting/receiving apparatus 2, for example, in accordance with an instruction from the reordering unit 52. Here, the reordering unit 52 may instruct the transmitted-packet indication information request signal transmitting unit 54 to transmit the transmitted-packet indication information request signal, for example, when the processor 30 has completed the processing of the packets indicated by the previously received transmitted-packet indication information.

The transmitted-packet indication information request signal receiving unit 24 depicted in FIG. 15 receives the transmitted-packet indication information request signal transmitted from the second packet transmitting/receiving apparatus 3. When the transmitted-packet indication information request signal is received by the transmitted-packet indication information request signal receiving unit 24, the transmitted-packet indication information generating unit 21 generates the transmitted-packet indication information, and the transmitted-packet indication information transmitting unit 23 transmits it out.

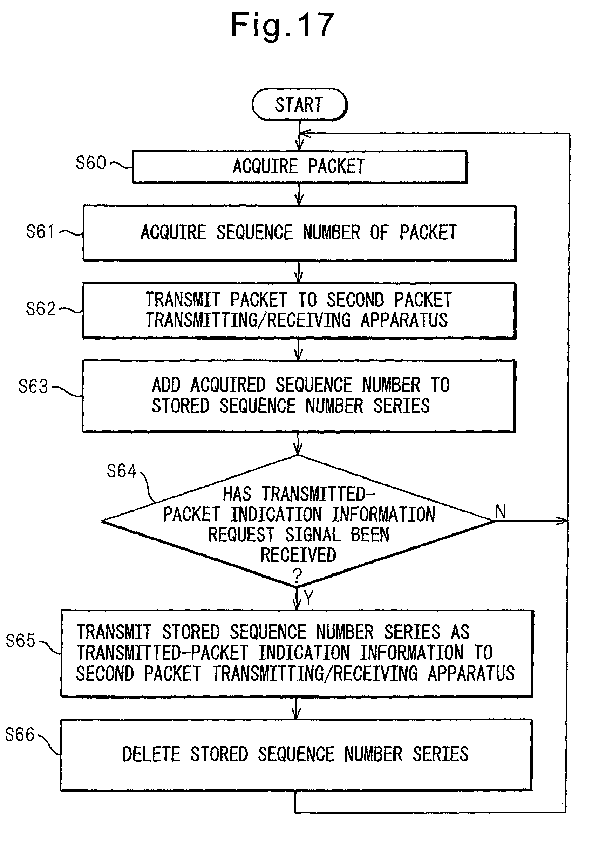

FIG. 17 is a flowchart illustrating a third example of the processing performed by the first packet transmitting/receiving apparatus 2 depicted in FIG. 4. In step S60, the packet acquiring unit 14 acquires a packet, as in step S1 depicted in FIG. 8. In step S61, the transmitted-packet indication information generating unit 21 acquires the sequence number embedded in the packet acquired in step S60. In step S62, the packet transmitting unit 20 transmits the packet acquired in step S60 to the second packet transmitting/receiving apparatus 3. In step S63, as in step S4 depicted in FIG. 8, the transmitted-packet indication information generating unit 21 stores the sequence number acquired in step S61 into the memory 13.

In step S64, the transmitted-packet indication information generating unit 21 determines whether the transmitted-packet indication information request signal receiving unit 24 has received the transmitted-packet indication information request signal. If the transmitted-packet indication information request signal is not received yet (N in step S64), the processor 10 returns the process to step S60. By repeating the process from steps S60 to S64 until the transmitted-packet indication information request signal is received, the transmitted-packet indication information generating unit 21 successively stores the sequence numbers of the transmitted packets in the memory 13.

When the transmitted-packet indication information request signal is received (Y in step S64), in step S65 the transmitted-packet indication information generating unit 21 generates the transmitted-packet indication information that carries all the sequence numbers stored in the memory 13. The transmitted-packet indication information transmitting unit 23 transmits the transmitted-packet indication information to the second packet transmitting/receiving apparatus 3. In step S66, the transmitted-packet indication information generating unit 21 deletes the sequence numbers stored in the memory 13. After that, the processor 10 returns the process to step S60.

According to the present embodiment, since the transmitted-packet indication information can be transmitted in accordance with demand from the second packet transmitting/receiving apparatus 3, the transmitted-packet indication information can be generated and transmitted efficiently.

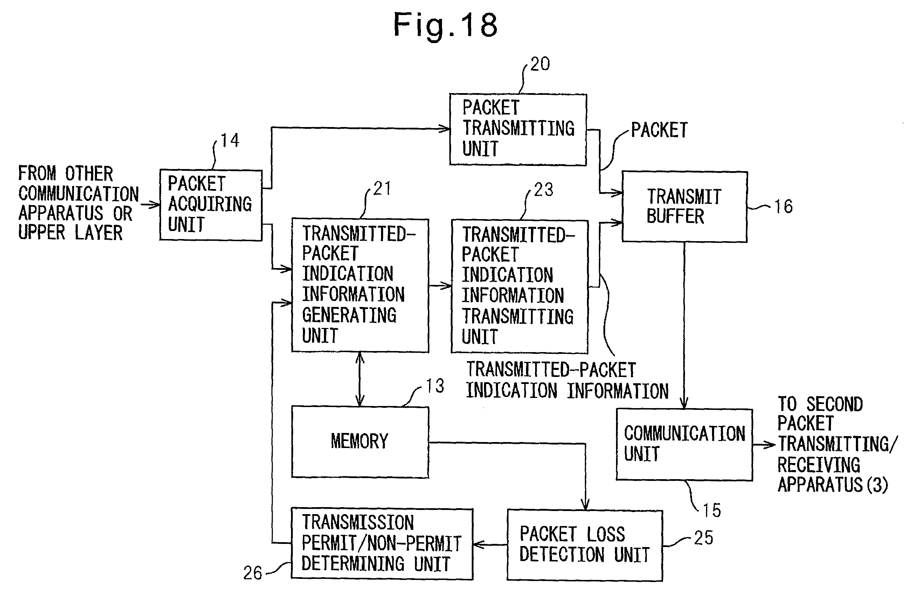

FIG. 18 is a third example of a block diagram of the first packet transmitting/receiving apparatus 2 depicted in FIG. 4. In this embodiment, the first packet transmitting/receiving apparatus 2 transmits the transmitted-packet indication information when a prescribed condition is satisfied after occurrence of a lost packet has been detected. The "lost packet" refers to a packet transmitted later than its succeeding packet when the packets from the first packet transmitting/receiving apparatus 2 failed to be transmitted to the second packet transmitting/receiving apparatus 3 in the order specified by their sequence numbers.

Of the component elements depicted in FIG. 18, the same component elements as those depicted in FIG. 5 are designated by the same reference numerals. The functions of a packet loss detection unit 25 and a transmission permit/non-permit determining unit 26 are implemented by the processor 10 of FIG. 4 by executing the control program 11 stored in the program storage unit 12.

The packet loss detection unit 25 detects the occurrence of a lost packet. For example, the packet loss detection unit 25 may detect the occurrence of a lost packet by detecting the presence or absence of a discontinuity in the sequence numbers stored in the memory 13. The transmission permit/non-permit determining unit 26 determines whether a prescribed condition is satisfied or not after the occurrence of a lost packet has been detected by the packet loss detection unit 25. When it is determined that the prescribed condition is satisfied, the transmitted-packet indication information generating unit 21 generates the transmitted-packet indication information, and the transmitted-packet indication information transmitting unit 23 transmits it out. The prescribed condition here may be satisfied, for example, when a predetermined time has elapsed after the detection of the packet loss, or when a predetermined number of packets have been transmitted after the detection of the packet loss.

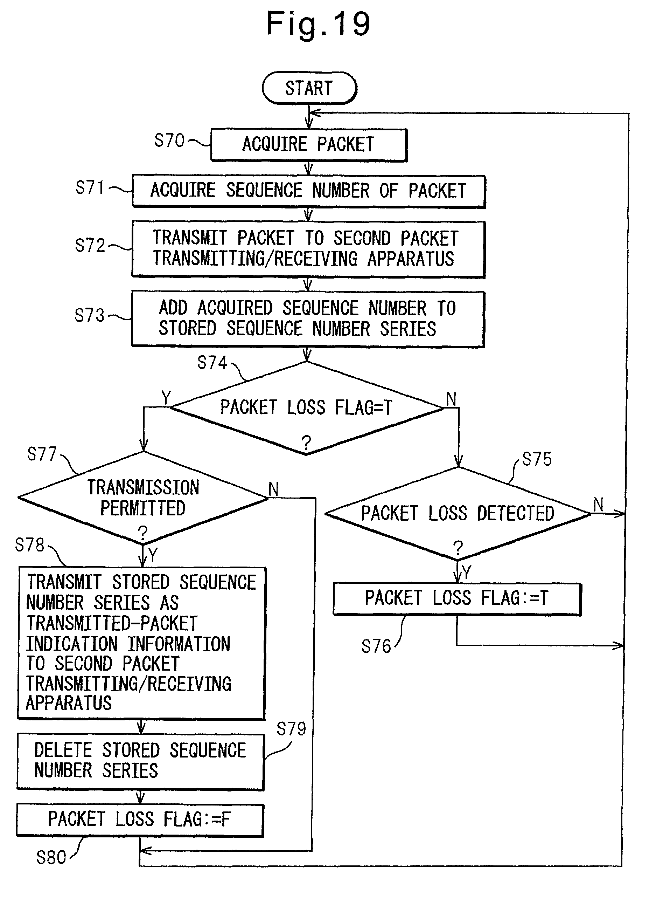

FIG. 19 is a flowchart illustrating a fourth example of the processing performed by the first packet transmitting/receiving apparatus 2 depicted in FIG. 4. In step S70, the packet acquiring unit 14 acquires a packet, as in step S1 depicted in FIG. 8. In step S71, the transmitted-packet indication information generating unit 21 acquires the sequence number embedded in the packet acquired in step S70. In step S72, the packet transmitting unit 20 transmits the packet acquired in step S70 to the second packet transmitting/receiving apparatus 3. In step S73, as in step S4 depicted in FIG. 8, the transmitted-packet indication information generating unit 21 stores the sequence number acquired in step S71 into the memory 13.

In step S74, the transmission permit/non-permit determining unit 26 refers to the value of a packet loss flag to determine whether it indicates the detection of a packet loss. The packet loss flag is a variable that can be referred to and changed by the processor 10, and can take two values, "T" that indicates the occurrence of a packet loss and "F" that indicates nonoccurrence of a packet loss.

If the value of the packet loss flag is not "T" (N in step S74), the processor 10 transfers the process to step S75. In step S75, the packet loss detection unit 25 detects whether a packet loss has occurred or not. If the occurrence of a packet loss is detected (Y in step S75), in step S76 the packet loss detection unit 25 sets the value of the packet loss flag to "T". After that, the processor 10 transfers the process to step S70.

If it is determined in step S75 that the occurrence of a packet loss is not detected (N in step S75), the processor 10 transfers the process to step S70.

If the value of the packet loss flag is "T" (Y in step S74), the processor 10 transfers the process to step S77. In step S77, the transmission permit/non-permit determining unit 26 determines whether the prescribed condition is satisfied or not. If the transmission permit/non-permit determining unit 26 has determined that the prescribed condition is satisfied (Y in step S77), in step S78 the transmitted-packet indication information generating unit 21 generates the transmitted-packet indication information that carries all the sequence numbers stored in the memory 13. The transmitted-packet indication information transmitting unit 23 transmits the transmitted-packet indication information to the second packet transmitting/receiving apparatus 3.

In step S79, the transmitted-packet indication information generating unit 21 deletes the sequence numbers stored in the memory 13. In step S80, the transmission permit/non-permit determining unit 26 sets the value of the packet loss flag to "F". After that, the processor 10 returns the process to step S70. If, in step S77, the transmission permit/non-permit determining unit 26 has determined that the prescribed condition is not satisfied (N in step S77), the processor 10 returns the process to step S70.

According to the present embodiment, when a packet loss has occurred, the transmitted-packet indication information can be transmitted out without having to check whether the lost packet has been successfully transmitted. Accordingly, the present embodiment can be implemented without imposing a large load on the processor 10 in the first packet transmitting/receiving apparatus 2.

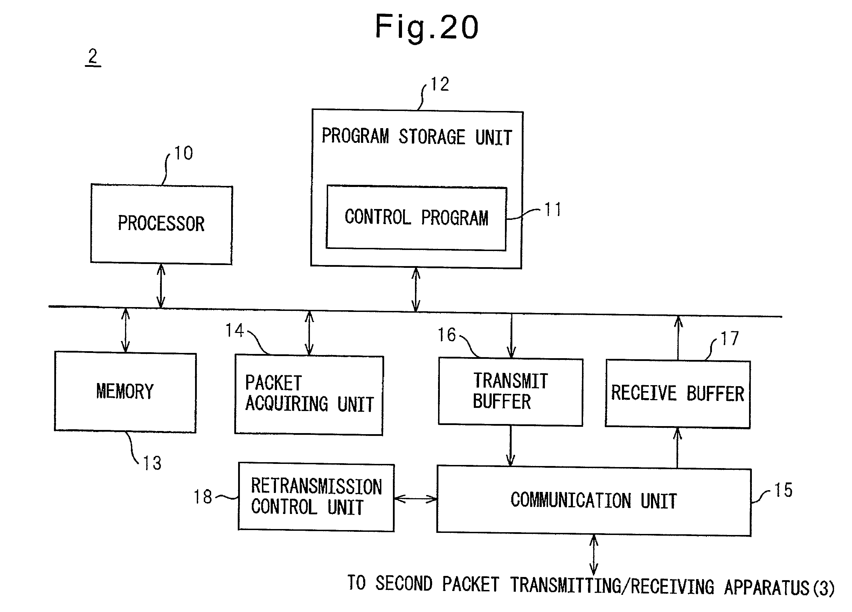

FIG. 20 is a diagram illustrating a second example of the hardware configuration of the first packet transmitting/receiving apparatus 2 depicted in FIG. 3. In this embodiment, the first packet transmitting/receiving apparatus 2 performs retransmission control during packet transmission to the second packet transmitting/receiving apparatus 3. For this purpose, the first packet transmitting/receiving apparatus 2 includes a retransmission control unit 18. The retransmission control performed between the first packet transmitting/receiving apparatus 2 and the second packet transmitting/receiving apparatus 3 may be, for example, HARQ control. In the present embodiment, the first packet transmitting/receiving apparatus 2 determines, based on an acknowledge signal returned from the second packet transmitting/receiving apparatus 3, whether a packet has been successfully transmitted to the second packet transmitting/receiving apparatus 3 or not.

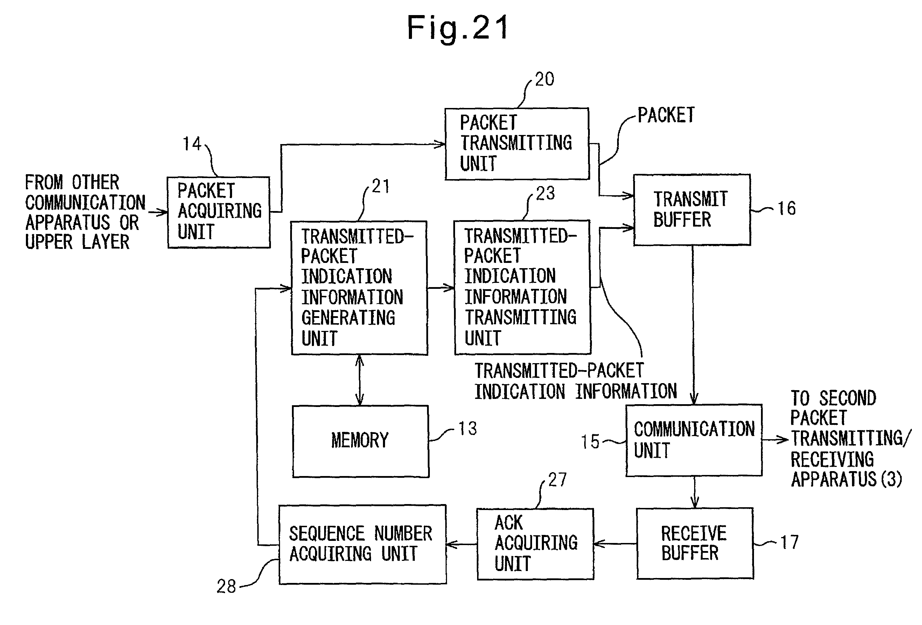

FIG. 21 is a block diagram of the first packet transmitting/receiving apparatus 2 depicted in FIG. 20. Here, the functions of an ACK acquiring unit 27 and a sequence number acquiring unit 28 are implemented by the processor 10 of FIG. 4 by executing the control program 11 stored in the program storage unit 12.

The ACK acquiring unit 27 acquires the acknowledge signal returned from the second packet transmitting/receiving apparatus 3 for each packet by the retransmission control performed by the retransmission control unit 18. The sequence number acquiring unit 28 acquires the sequence number of the packet from the acknowledge signal that the ACK acquiring unit 27 acquired for that packet.

Of the component elements depicted in FIG. 21, the same component elements as those depicted in FIG. 5 are designated by the same reference numerals. Here, the transmitted-packet indication information generating unit 21 receives from the sequence number acquiring unit 28 the sequence number of each packet transmitted by the packet transmitting unit 20 and, based on the received sequence number, identifies the packet transmitted by the packet transmitting unit 20.

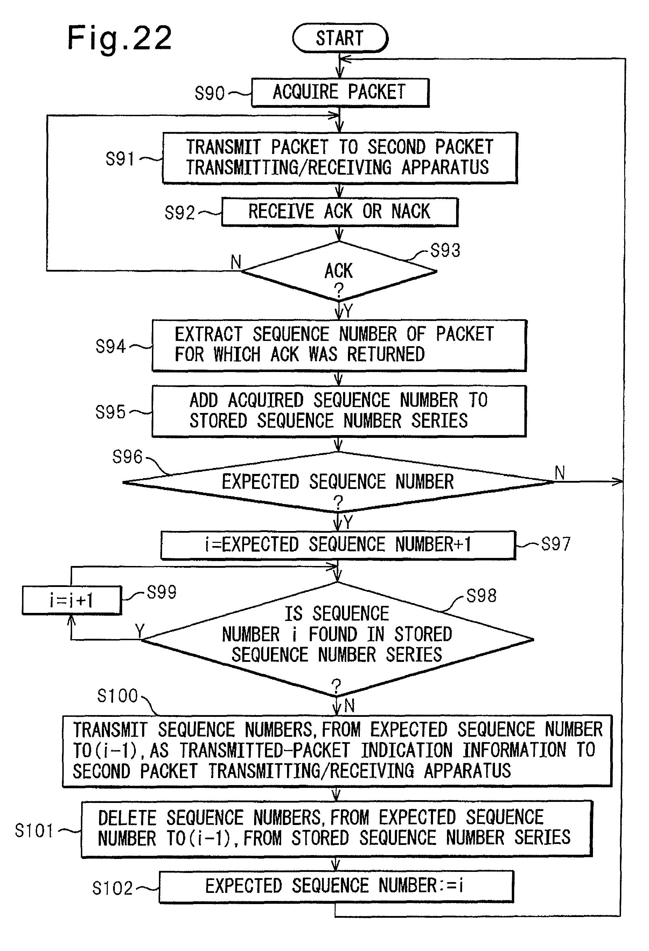

FIG. 22 is a flowchart illustrating an example of the processing performed by the first packet transmitting/receiving apparatus 2 depicted in FIG. 20. In step S90, the packet acquiring unit 14 acquires a packet, as in step S1 depicted in FIG. 8. In step S91, the packet transmitting unit 20 transmits the packet acquired in step S90 to the second packet transmitting/receiving apparatus 3. In step S92, the communication unit 15 receives an acknowledge signal (ACK) or a negative acknowledge signal (NACK) from the second packet transmitting/receiving apparatus 3 for the packet transmitted in step S91.

In step S93, the processor 10 determines whether the communication unit 15 has received an acknowledge signal. If the communication unit 15 has received a negative acknowledge signal (N in S93), the processor 10 returns the process to step S91 to retransmit the packet. If it is determined in step S93 that the communication unit 15 has received an acknowledge signal (Y in S93), the processor 10 transfers the process to step S94.

In step S94, the ACK acquiring unit 27 acquires the acknowledge signal from the receive buffer 17. The sequence number acquiring unit 29 extracts from the acknowledge signal the sequence number of the packet for which the acknowledge signal was returned. The transmitted-packet indication information generating unit 21 receives the extracted sequence number from the sequence number acquiring unit 28.

In step S95, as in step S4 depicted in FIG. 8, the transmitted-packet indication information generating unit 21 stores the sequence number acquired in step S94 into the memory 13. In step S96, the transmitted-packet indication information generating unit 21 determines whether the sequence number acquired in step S94 is the expected sequence number or not. If the sequence number acquired in step S94 is not the expected sequence number (N in step S96), the processor 10 returns the process to step S90.

If the sequence number acquired in step S94 is the expected sequence number (Y in step S96), then in step S97 the transmitted-packet indication information generating unit 21 sets the value of index variable i to (the expected sequence number + 1). In steps S98 and S99, the transmitted-packet indication information generating unit 21 searches for the smallest expected sequence number not stored in the memory 13. More specifically, in step S98, the transmitted-packet indication information generating unit 21 determines whether or not the sequence number equal to the value of index variable i is stored in the memory 13. As long as the sequence number equal to the value of index variable i is stored in the memory 13 (Y in step S98), the transmitted-packet indication information generating unit 21 increments the value of index variable i by 1 in step S99, and repeats the steps S99 and S98.

If the smallest expected sequence number not stored in the memory 13 is found (N in step S98), the transmitted-packet indication information generating unit 21 proceeds to step S100 to generate the transmitted-packet indication information that carries the consecutive sequence numbers starting from the expected sequence number and continuing up to (i-1). The transmitted-packet indication information transmitting unit 23 transmits the transmitted-packet indication information to the second packet transmitting/receiving apparatus 3.

In step S101, the transmitted-packet indication information generating unit 21 deletes from the memory 13 the consecutive sequence numbers starting from the expected sequence number and continuing up to (i-1). In step S102, the transmitted-packet indication information generating unit 21 updates the value of the expected sequence number to the value of index variable i. After that, the processor 10 returns the process to step S90.

According to the present embodiment, by making the determination based on the acknowledge signal, the first packet transmitting/receiving apparatus 2 can more accurately determine whether the packet of the expected sequence number has been transmitted or not.

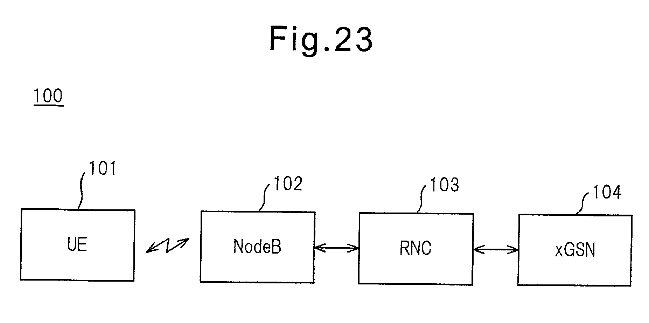

FIG. 23 is a diagram illustrating a second example of the configuration of the communication system disclosed herein. The communication system 100 includes a mobile station as user equipment (UE) 101, a base station (NodeB) 102, a radio network controller (RNC) 103, and an xGSN 104. According to one embodiment, the communication system 100 is a W-CDMA mobile communication system, and the communication system 100 provides HSUPA service for the uplink transmission from the mobile station 101 to its host apparatus. The following describes an embodiment in which the first packet transmitting/receiving apparatus 2 depicted in FIG. 3 is applied as the base station 102, the second packet transmitting/receiving apparatus 3 as the radio network controller 103, and the third packet transmitting/receiving apparatus 4 as the xGSN 104.

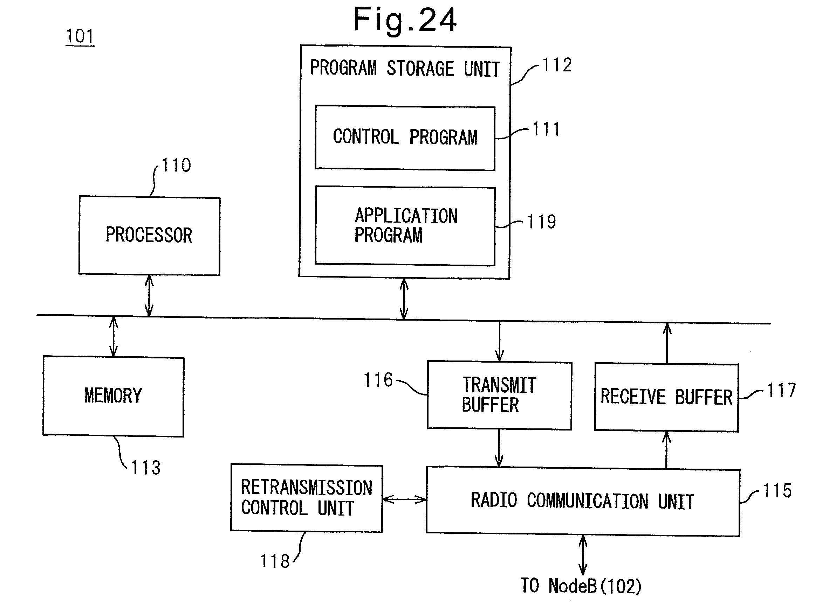

FIG. 24 is a diagram illustrating the hardware configuration of the mobile station 101 depicted in FIG. 23. The mobile station 101 includes a processor 110, a program storage unit 112 storing a control program 111, a memory 113, a radio communication unit 115, a transmit buffer 116, a receive buffer 117, and a retransmission control unit 118.

The processor 110 is implemented using a data processor such as a CPU, and controls the operation of the mobile station 101 by executing the control program 111 stored in the program storage unit 112. The program storage unit 112 may also store an application program 119 which is executed by the processor 10 to generate user data. The memory 113 is used to store data necessary for the execution of the control program 111 and the application program 119, and is also used to store temporary data generated during the execution of such programs.

The mobile station 101 transmits the user data generated by the application program 119 to the base station 102 by dividing it into frames each having a predetermined format. Each frame may be, for example, a MAC-es PDU. Each of the frames carrying the user data is preassigned a sequence number that indicates the order of the frame in the sequence of frames. The sequence number may be embedded in each frame. In the following description, the frames into which the user data has been divided may be referred to simply as the "user data."

The radio communication unit 115 has the function of handling radio communication between the mobile station 101 and the base station 102 as its host apparatus. For example, the radio communication unit 115 transmits the user data to the base station 102. Further, the radio communication unit 115 receives an acknowledge signal or a negative acknowledge signal returned from the base station 102 for the transmitted user data. The transmit buffer 116 temporarily holds the data to be transmitted to the base station 102, until the radio communication unit 115 accepts the data. The receive buffer 117 temporarily holds the data that the radio communication unit 115 received from the based station 102. The retransmission control unit 118 performs retransmission control during the radio communication between the radio communication unit 115 and the base station 102. The retransmission control performed by the retransmission control unit 118 may be, for example, HARQ control.

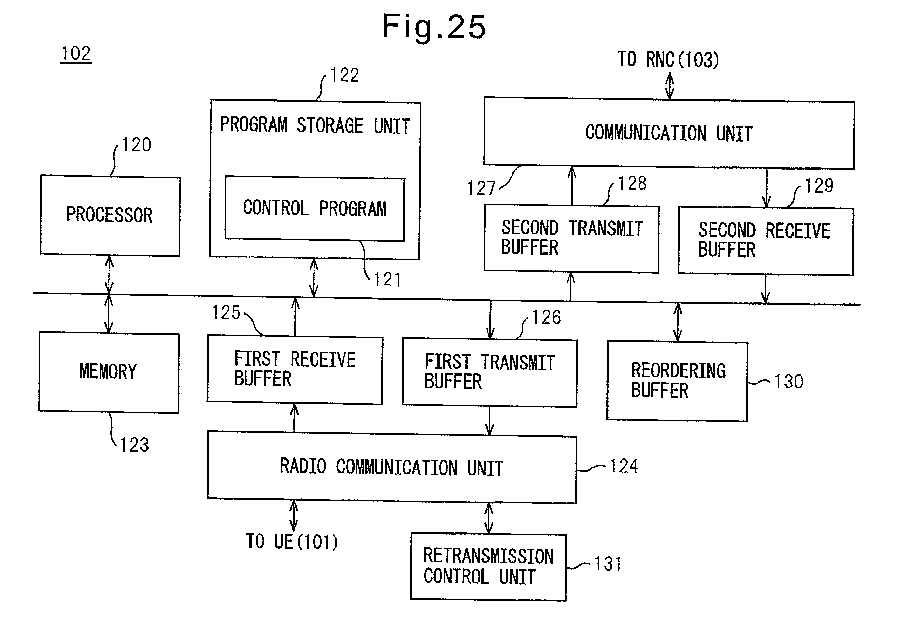

FIG. 25 is a diagram illustrating the hardware configuration of the base station 102 depicted in FIG. 23. The base station 102 includes a processor 120, a program storage unit 122 storing a control program 121, a memory 123, a radio communication unit 124, a first receive buffer 125, and a first transmit buffer 126. The base station 102 further includes a communication unit 127, a second transmit buffer 128, a second receive buffer 129, a reordering buffer 130, and a retransmission control unit 131.

The processor 120 is implemented using a data processor such as a CPU, and controls the operation of the base station 102 by executing the control program 121 stored in the program storage unit 122. The memory 113 is used to store data necessary for the execution of the control program 121, etc., and is also used to store temporary data generated during the execution of such programs.

The radio communication unit 124 has the function of handling radio communication between it and the mobile station 101. For example, the radio communication unit 124 receives the user data transmitted from the base station 102. Further, the radio communication unit 124 transmits an acknowledge signal or a negative acknowledge signal to the mobile station 101 for the user data received from the mobile station 101. The first receive buffer 125 temporarily holds the data that the radio communication unit 124 received from the mobile station 101. The first transmit buffer 126 temporarily holds the data to be transmitted from the base station 102 to the mobile station 101, until the radio communication unit 124 accepts the data.

The communication unit 127 transmits and receives data to and from the radio network controller 103, i.e., the host apparatus of the base station 101. For example, the communication unit 127 transmits the user data received from the mobile station 101 on to the radio network controller 103. The second receive buffer 129 temporarily holds the data that the communication unit 127 received from the radio network controller 103. The second transmit buffer 128 temporarily holds the data to be transmitted from the base station 102 to the radio network controller 103, until the communication unit 127 accepts the data. The retransmission control unit 131 performs retransmission control during the radio communication between the radio communication unit 124 and the mobile station 101. The reordering buffer 130 will be described later.

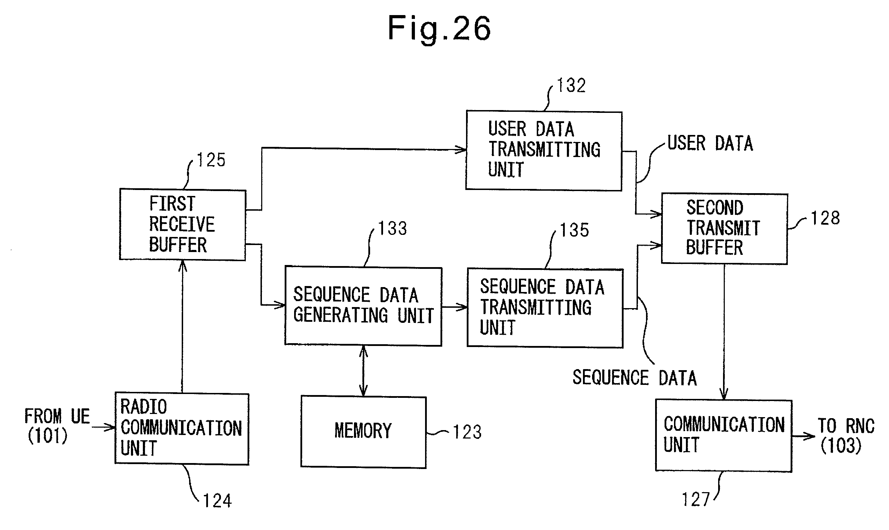

FIG. 26 is a first example of a block diagram of the base station 102 depicted in FIG. 25. The functions of a user data transmitting unit 132, a sequence data generating unit 133, and a sequence data transmitting unit 135 are implemented by the processor 120 executing the control program 121 stored in the program storage unit 122.

The user data transmitting unit 132 performs processing to transmit the user data received from the mobile station 101 by the radio communication unit 124 on to the radio network controller 103. The user data transmitting unit 132 stores the user data in the second transmit buffer 128 for transmission to the radio network controller 103, and the communication unit 127 transmits the user data stored in the second transmit buffer 128 to the radio network controller 103.

The sequence data generating unit 133 takes as input the user data received from the mobile station 101, acquires the sequence numbers from the user data, and generates sequence data that carries the thus acquired sequence numbers. The sequence data designates the user data to be transmitted from the user data transmitting unit 132, and corresponds to one example of the transmitted-packet indication information illustrated in connection with the other embodiments described earlier.

For example, when the base station 102 received the user data in the order of the sequence numbers n1, n2, n3, and n4, the sequence data generating unit 133 may generate the sequence data by arranging the sequence numbers in the order n1, n2, n3, and n4, i.e., in the same order in which the user data were received.

The sequence data generating unit 133 extracts the sequence number embedded in each user data received from the mobile station 101. The sequence data generating unit 133 stores the extracted sequence number in the memory 123. As the sequence number of each user data is extracted, the sequence data generating unit 133 adds it to the series of sequence numbers so far stored in the memory 123, and thereby generates the series of sequence numbers arranged in the order in which the user data were received. In accordance with transmit timing to be described later, the sequence data generating unit 133 retrieves the series of sequence numbers from the memory 123 and passes the sequence data containing the series of sequence numbers to the sequence data transmitting unit 135. Since the user data transmitting unit 132 transmits the user data to the radio network controller 103 in the order in which they were received from the mobile station 101, the order of the sequence numbers contained in the sequence data is the same as the order in which the user data are transmitted from the base station 102 to the radio network controller 103.

The sequence data transmitting unit 135 performs processing to transmit the sequence data generated by the sequence data generating unit 133 to the radio network controller 103. The sequence data transmitting unit 135 stores the sequence data in the second transmit buffer 128, and the communication unit 127 transmits the sequence data stored in the second transmit buffer 128 to the radio network controller 103.

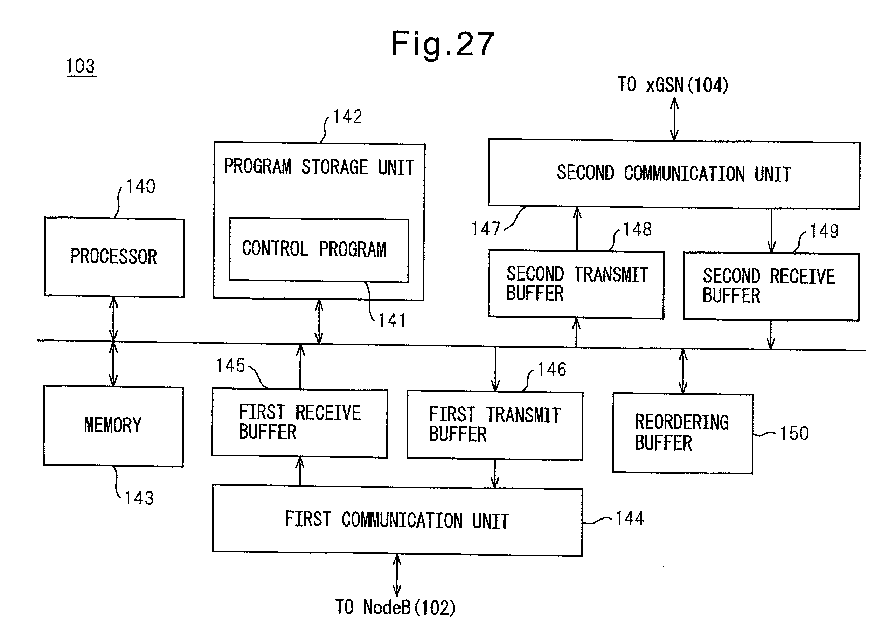

FIG. 27 is a diagram illustrating the hardware configuration of the radio network controller 103 depicted in FIG. 23. The radio network controller 103 includes a processor 140, a program storage unit 142 storing a control program 141, a memory 143, a first communication unit 144, a first receive buffer 145, and a first transmit buffer 146. The radio network controller 103 further includes a second communication unit 147, a second transmit buffer 148, a second receive buffer 149, and a reordering buffer 150.

The processor 140 is implemented using a data processor such as a CPU, and controls the operation of the radio network controller 103 by executing the control program 141 stored in the program storage unit 142. The memory 143 is used to store data necessary for the execution of the control program 141, etc., and is also used to store temporary data generated during the execution of such programs.

The first communication unit 144 transmits and receives data to and from the base station 102. For example, the first communication unit 144 receives the user data transmitted from the base station 102. Further, the first communication unit 144, for example, receives the sequence data transmitted from the base station 102. The first receive buffer 145 temporarily holds the data that the first communication unit 144 received from the base station 102. The first transmit buffer 146 temporarily holds the data to be transmitted from the radio network controller 103 to the base station 102, until the first communication unit 144 accepts the data.

The second communication unit 147 transmits and receives data to and from the xGSN 104, i.e., the host apparatus of the radio network controller 103. For example, the second communication unit 147 transmits the user data received from the mobile station 101 on to the xGSN 104. The second receive buffer 149 temporarily holds the data that the second communication unit 147 received from the xGSN 104. The second transmit buffer 148 temporarily holds the data to be transmitted from the radio network controller 103 to the xGSN 104, until the second communication unit 147 accepts the data.

In the present embodiment, the reordering buffer 150 is a buffer used for saving the user data from the first receive buffer 145, as necessary, when performing the reordering of the user data received from the base station 102.

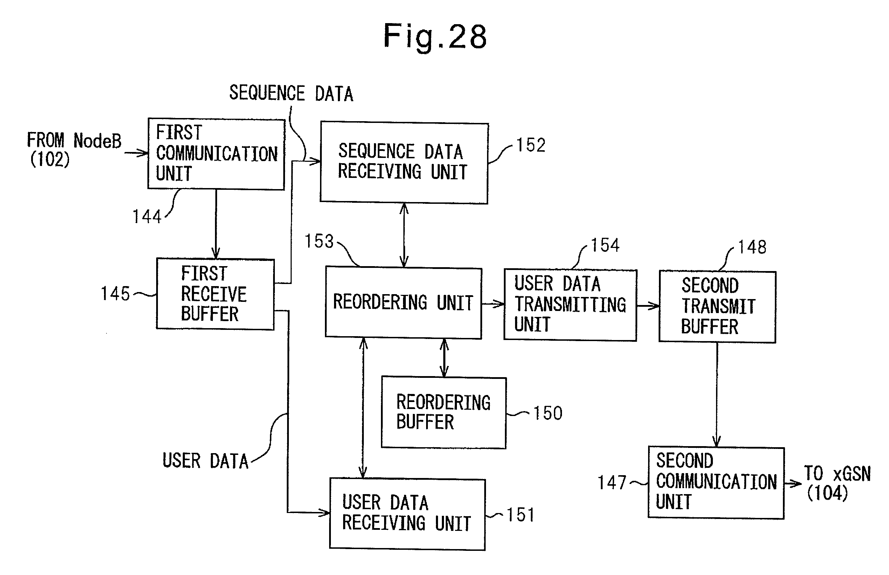

FIG. 28 is a block diagram of the radio network controller 103 depicted in FIG. 27. Here, the functions of a user data receiving unit 151, a sequence data receiving unit 152, a reordering unit 153, and a user data transmitting unit 154 are implemented by the processor 140 executing the control program 141 stored in the program storage unit 142.

The user data receiving unit 151 performs processing to receive the user data received by the first communication unit 144 and held in the first receive buffer 14. The sequence data receiving unit 152 performs processing to receive the sequence data received by the first communication unit 144 and held in the first receive buffer 145.

The reordering unit 153 performs processing to reorder the user data received from the base station 102 according to their sequence numbers. During the reordering, the reordering unit 153 saves the user data retrieved from the first receive buffer 145, as necessary, into the reordering buffer 150. The user transmitting unit 154 performs processing to transmit the user data to the xGSN 104 in the order rearranged by the reordering unit 153. The user data transmitting unit 154 stores the user data in the second transmit buffer 148 for transmission to the xGSN 104, and the second communication unit 147 transmits the user data stored in the second transmit buffer 148 to the xGSN 104.

FIG. 29 is a diagram illustrating the reordering performed by using the reordering buffer 150. Reference numeral 200 indicates the user data generated by the application program 119 that runs on the mobile station 101. Square boxes indicate the user data divided into data frames, and the numbers "1" to "5" contained in the square boxes indicate the sequence numbers of the respective user data.

Reference numerals 201 and 202 indicate the user data to be transmitted from the mobile station 101 to the base station 102 and from the base station 102 to the radio network controller 103, respectively. The user data located at higher positions are earlier in the transmission order than those located at lower positions. Suppose that, in the transmission from the mobile station 101 to the base station 102, the first transmission of the user data of sequence number "2" failed and the user data of sequence number "2" was retransmitted by means of retransmission control after transmission of the user data of sequence number "5", as indicated at reference numeral 201.

In this case, the base station 102 transmits the user data to the radio network controller 103 in the order of the sequence numbers "1", "3", "4", "5", and "2", as indicated at reference numeral 202. As a result, the radio network controller 103 stores the user data in the first receive buffer 145 in the order in which they were received, that is, in the order of the sequence numbers "1", "3", "4", "5", and "2".

If the processor 140 in the radio network controller 103 is congested, the processor 140 is unable to immediately start the processing of the received user data even when the user data are stored in the receive buffer 145. In FIG. 29, the reordering unit 153 in the radio network controller 103 starts processing the user data of sequence number "1" after all the succeeding user data of sequence numbers "2" to "5" have been stored. The positions of the user data contained in the first receive buffer 145, the reordering unit 153, and the reordering buffer 150, respectively, as viewed along the vertical direction, schematically indicate the relationships among the processing timings at the respective component elements 145, 153, and 150.

In the case of the reordering process that uses the reordering buffer 150, the reordering unit 153 retrieves the user data from the first receive buffer 145 in the same order in which they were received. Here, if the order of the reception does not match the order of the sequence numbers, the reordering unit 153 performs control so that any user data received earlier than user data having an earlier sequence number than it is saved to the reordering buffer 150.

More specifically, in the example illustrated in FIG. 29, the user data having the sequence numbers "3" to "5" are received earlier than their preceding user data having the sequence number "2". Therefore, the reordering unit 153 saves the user data of sequence numbers "3" to "5" to the reordering buffer 150. Reference numeral 204 indicates the user data of sequence numbers "2" to "5", including the user data of sequence numbers "3" to "5", that have been saved in the reordering buffer 150.

After retrieving the user data of sequence number "2" from the first receive buffer 145 and saving it to the reordering buffer 150, the reordering unit 153 causes the user data transmitting unit 154 to transmit the user data in accordance with the order specified by their sequence numbers. The second transmit buffer 148 stores the user data waiting for their turns to be transmitted. As indicated in reference numeral 205, the user data are stored in the second transmit buffer 148 in the order of the sequence numbers.

The reordering unit 153 continues to hold the user data of sequence numbers "3" to "5" in the reordering buffer 150 until after the user data of sequence number "2" is retrieved from the first receive buffer 145. As a result, the processing to transmit the user data of sequence numbers "2" to "5" is delayed, as indicated at reference numeral 205. The square boxes indicated at reference numeral 206 provide a time chart of the user data to be transmitted from the radio network controller 103 to the xGSN. Many empty time slots "e" (reference numeral 207) occur between the user data of sequence numbers "1" and "2" due to the transmission delay of the user data of sequence numbers "2" to "5".

After the user data of sequence number "2" has been retrieved from the first receive buffer 145, the reordering unit 153 transmits all the packets saved in the reordering buffer 150 to the xGSN 104 in a bursty manner. This causes a transmission burst, increasing the load on the xGSN 104. Reference numeral 208 illustrates how this occurs. If the xGSN 104 is equipped with a guard means that involves shaping, the transmission burst can cause a data dropout.

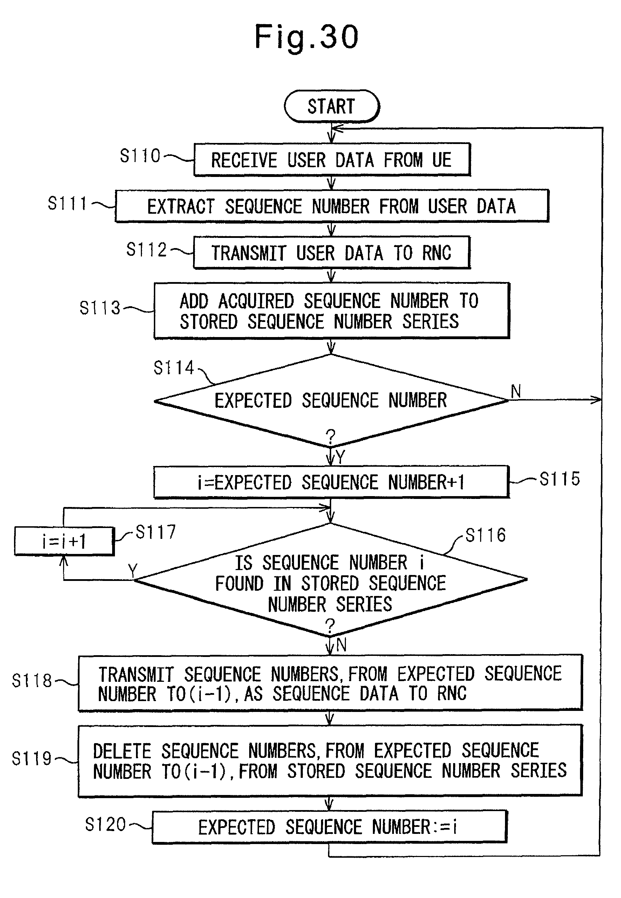

FIG. 30 is a flowchart illustrating the processing performed by the base station 102 depicted in FIG. 25. In step S110, the radio communication unit 124 receives the user data transmitted from the mobile station 101, and stores the received data in the first receive buffer 125. In step S111, the sequence data generating unit 133 extracts the sequence number embedded in the user data acquired in step S110. In step S112, the user data transmitting unit 132 transmits the user data acquired in step S110 to the radio network controller 103.

In step S113, the sequence data generating unit 133 stores the sequence number acquired in step S111 into the memory 123. If the sequence number of any previously received user data is already stored in the memory 123, the sequence data generating unit 133 adds the acquired sequence number immediately after the sequence number already stored in the memory 123.

In step S114, the sequence data generating unit 133 determines whether the sequence number acquired in step S111 is the expected sequence number or not. In the processing performed by the base station 102 to transmit the user data to the radio network controller 103, the "expected sequence number" refers to the sequence number that comes first in the transmission order among the sequence numbers of the user data yet to be transmitted. In the present embodiment, it is assumed that the transmission order is in ascending order of the sequence numbers. In this case, the "expected sequence number" refers to the smallest sequence number among the sequence numbers of the packets yet to be transmitted.

If it is determined in step S114 that the sequence number acquired in step S111 is not the expected sequence number (N in step S114), the processor 120 returns the process to step S110. By repeating the process from S110 to S114, the sequence data generating unit 133 successively stores in the memory 123 the sequence numbers of the transmitted user data having sequence numbers succeeding the expected sequence number.

If it is determined in step S114 that the sequence number acquired in step S111 is the expected sequence number (Y in step S114), then in step S115 the sequence data generating unit 133 sets the value of index variable i to (the expected sequence number + 1). In steps S116 and S117, the sequence data generating unit 133 searches for the smallest expected sequence number not stored in the memory 123. More specifically, in step S116, the sequence data generating unit 133 determines whether or not the sequence number equal to the value of index variable i is stored in the memory 123. As long as the sequence number equal to the value of index variable i is stored in the memory 123 (Y in step S116), the sequence data generating unit 133 increments the value of index variable i by 1 in step S117, and repeats the steps S116 and S117.

If the smallest expected sequence number not stored in the memory 123 is found (N in step S116), the sequence data generating unit 133 proceeds to step S118 to generate the sequence data that carries the consecutive sequence numbers starting from the expected sequence number and continuing up to (i-1). The format of the sequence data may be the same as that illustrated with reference to FIG. 9. The sequence data transmitting unit 135 transmits the sequence data to the radio network controller 103.

In step S119, the sequence data generating unit 133 deletes from the memory 123 the consecutive sequence numbers starting from the expected sequence number and continuing up to (i-1). In step S120, the sequence data generating unit 133 updates the value of the expected sequence number to the value of index variable i. After that, the processor 120 returns the process to step S110.

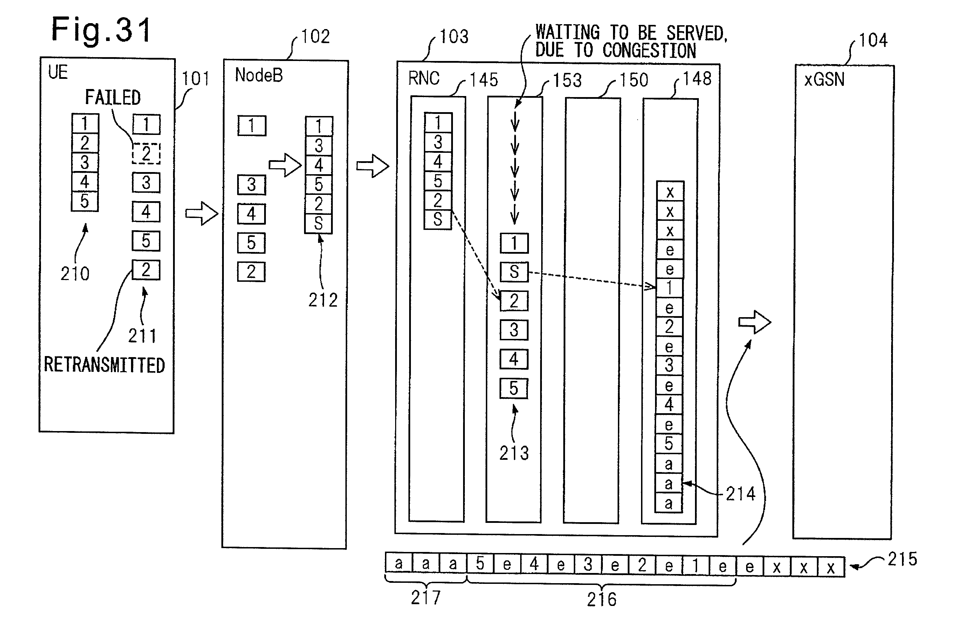

FIG. 31 is a diagram illustrating a first example of the operation of the communication system 100 depicted in FIG. 23. Reference numeral 210 indicates the user data generated by the application program 119 that runs on the mobile station 101. Square boxes indicate the user data divided into data frames, and the numbers "1" to "5" contained in the square boxes indicate the sequence numbers of the respective user data.

Reference numerals 211 indicates the user data to be transmitted from the mobile station 101 to the base station 102. The user data located at higher positions are earlier in the transmission order than those located at lower positions. Reference numerals 212 indicates the user data and sequence data to be transmitted from the base station 102 to the radio network controller 103. The sequence data is indicated by a square box containing a character "S".

Suppose that, in the transmission from the mobile station 101 to the base station 102, the first transmission of the user data of sequence number "2" failed and the user data of sequence number "2" was retransmitted after transmission of the user data of sequence number "5", as indicated at reference numeral 211. In this case, the user data are transmitted to the radio network controller 103 in the order of the sequence numbers "1", "3", "4", "5", and "2" (step S112)*.*

In the loop of steps S110 to S114, the value of the expected sequence number is "2" because of the failure of reception of the user data of sequence number "2". As a result, the sequence numbers "3", "4", and "5" are held in the memory 123 until the base station 102 acquires the user data of sequence number "2".

When the base station 102 receives the user data of sequence number "2" (Y in step S114), the sequence data generating unit 133 generates the transmitted-sequence data S that carries the sequence numbers "2" to "5" (step S118). The sequence data S may include the sequence numbers "2" to "5" arranged in the order in which the user data are transmitted from the base station 102 to the radio network controller 103. For example, in the illustrated example, the sequence numbers "2" to "5" stored in the sequence data S are arranged in the order of "3", "4", "5", and "2".

The sequence data transmitting unit 135 transmits the sequence data S after transmission of the user data of sequence number "2". Reference number 212 indicates how the sequence data S is transmitted to the radio network controller 103 after the user data of sequence number "2".

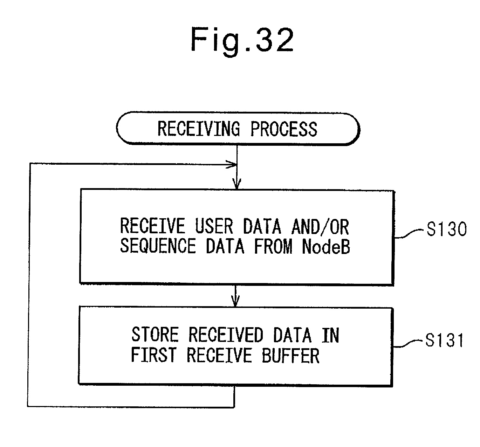

FIG. 32 is a flowchart illustrating the receiving process performed by the radio network controller 103 depicted in FIG. 27. In step S130, the first communication unit 144 in the radio network controller 103 receives the user data and/or sequence data transmitted from the base station 102. In step S131, the first communication unit 144 stores the data received in step S130 into the first receive buffer 145 in the order in which they were received. By repeating steps S130 and S131, the radio network controller 103 successively stores the data received from the base station 102 into the first receive buffer 145.

The user data received from the base station 102 and stored in the first receive buffer 145 are first reordered according to their sequence numbers by the reordering unit 153 depicted in FIG. 28 and then transmitted on to the xGSN 104.

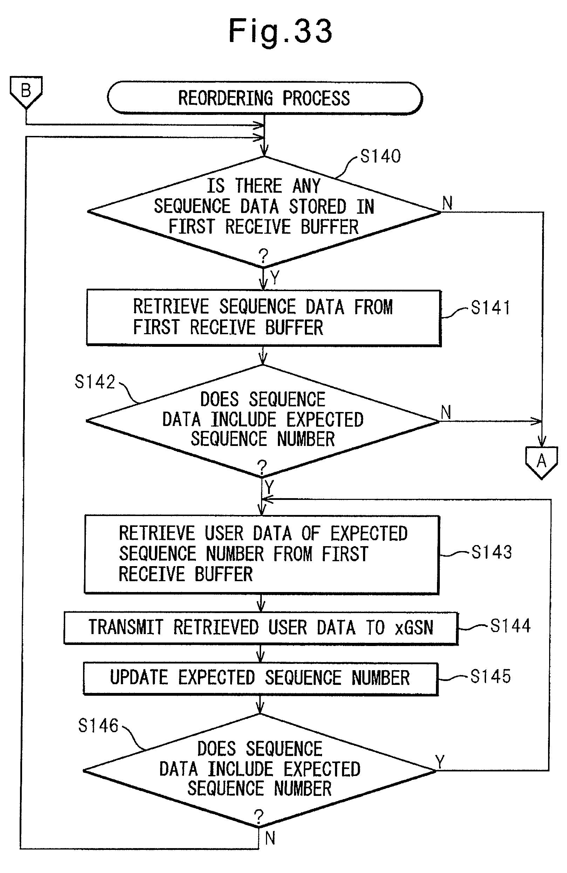

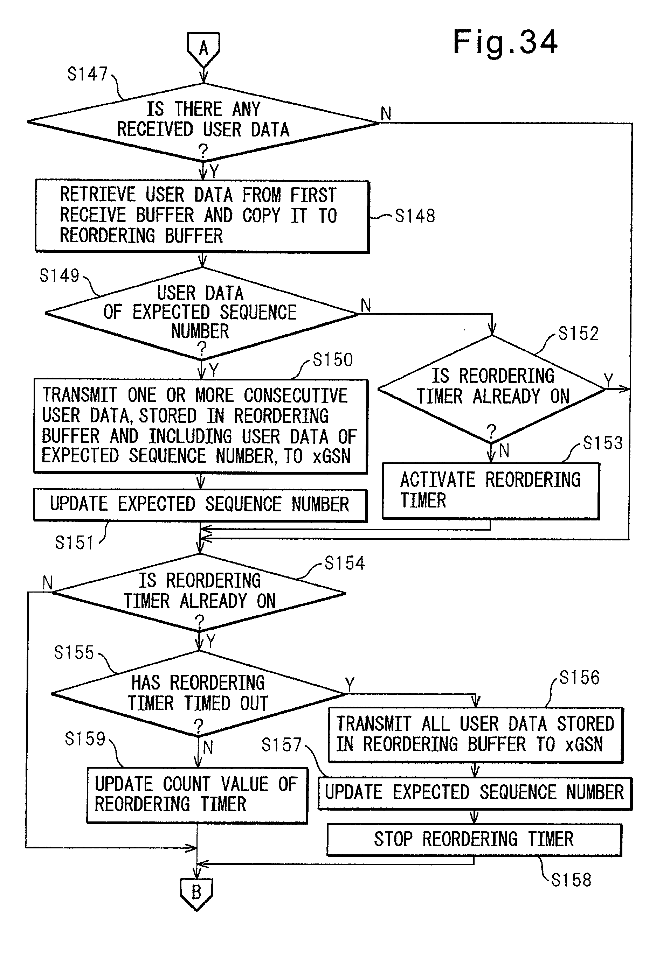

FIGS. 33 and 34 are a flowchart illustrating the reordering process performed by the radio network controller 103 depicted in FIG. 23. In step S140, the reordering unit 153 determines whether there is any sequence data stored in the first receive buffer 145. If there is no sequence data stored in the first receive buffer 145 (N in step S140), the reordering unit 153 transfers the process to step S147 (as indicated by reference character A). If there is any sequence data stored in the first receive buffer 145 (Y in step S140), the reordering unit 153 transfers the process to step S141.

In step S141, the reordering unit 153 retrieves the sequence data from the first receive buffer 145. In step S142, the reordering unit 153 determines whether the retrieved sequence data includes the expected sequence number. In the processing performed by the radio network controller 103 to receive user data from the base station 102, the "expected sequence number" refers to the sequence number of the user data whose sequence number is the smallest among the user data yet to be transmitted and whose succeeding user data also have yet to be reordered by the reordering unit 153.

If the expected sequence number is not included in the sequence data (N in step S142), the reordering unit 153 transfers the process to step S147 (as indicated by reference character A). If the expected sequence number is included in the sequence data (Y in step S142), the reordering unit 153 transfers the process to step S143.

In step S143, the user data receiving unit 151 retrieves the user data having the expected sequence number from the first receive buffer 145. In step S144, the user data transmitting unit 154 transmits the user data retrieved in step S143 to the xGSN 104. In step S145, the reordering unit 153 updates the expected sequence number by incrementing the expected sequence number by 1.

In step S146, the reordering unit 153 determines whether the sequence data includes the updated expected sequence number. If the updated expected sequence number is included in the sequence data (Y in step S146), the reordering unit 153 returns the process to step S143.

Thus, the processor 140 repeats the process from steps S143 to S146, as long as the expected sequence number incremented by 1 in step S145 is included in the sequence data retrieved in step S141. As a result, the processor 140 can transmit the user data of consecutive sequence numbers to the xGSN 104 by retrieving the user data from the first receive buffer 145 according to their sequence numbers. That is, by retrieving the user data from the first receive buffer 145 according to their sequence numbers, the reordering unit 153 can accomplish the reordering without using the reordering buffer.

If the updated expected sequence number is not included in the sequence data (N in step S146), the processor 140 returns the process to step S140.

In step S147, the reordering unit 153 determines whether there is any received user data stored in the first receive buffer 145. If there is any received user data stored (Y in step S147), the reordering unit 153 transfers the process to step S148. If there is no received user data (N in step S147), the reordering unit 153 transfers the process to step S154.

In step S148, the user data receiving unit 151 retrieves the user data from the first receive buffer 145, and the reordering unit 153 copies the retrieved user data to the reordering buffer 150, thereby saving the user data from the first receive buffer 145 into the reordering buffer 150. If there is any user data already stored in the reordering buffer 150, the reordering unit 153 stores the retrieved user data to add to the already stored user data.

In step S149, the reordering unit 153 identifies whether or not the sequence number of the user data saved to the reordering buffer 150 in step S148 is identical with the expected sequence number. If the sequence number of the saved user data is identical with the expected sequence number (Y in step S149), the reordering unit 153 transfers the process to step S150.

In step S150, the reordering unit 153 transmits one or more consecutive user data, including the user data of the expected sequence number, to the xGSN 104 by taking them from among the user data stored in the reordering buffer 150. In step S151, the reordering unit 153 updates the value of the expected sequence number to (the largest sequence number among the user data transmitted in S150 + 1).

If it is determined in step S149 that the sequence number of the saved user data is not the expected sequence number (N in step S149), the reordering unit 153 transfers the process to step S152. In step S152, the reordering unit 153 checks to determine if a reordering timer is already ON or not. The reordering timer here may be, for example, a software timer implemented by the processing of the processor 140. The counting of the time by the reordering timer is started when user data having a sequence number other than the expected sequence number is saved to the reordering buffer 150 that is empty. The reordering timer is a timer used to cause the user data successively stored in the reordering buffer 150 to be transmitted to the xGSN 104 when a predetermined time has elapsed after saving the first user data to the reordering buffer 150.

If it is determined in step S152 that the reordering timer is not ON (N in step S152), the reordering unit 153 transfers the process to step S153. In step S153, the reordering unit 153 activates the reordering timer, thus starting the counting of the time by the reordering timer. After that, the reordering unit 153 transfers the process to step S154. If it is determined in step S152 that the reordering timer is already ON (Y in step S152), the reordering unit 153 transfers the process to step S154.

In step S154, the reordering unit 153 checks to determine if the reordering timer is already ON or not. If the reordering timer is not ON (N in step S154), the processor 140 returns the process to step S140 (as indicated by reference character B). If the reordering timer is already ON (Y in step S154), the reordering unit 153 transfers the process to step S155.

In step S155, the reordering unit 153 determines whether the time counted by the reordering timer has exceeded the predetermined time, that is, whether the reordering timer has timed out. When the reordering timer has timed out (Y in step S155), the reordering unit 153 transfers the process to step S156.

In step S156, the reordering unit 153 transmits all the user data stored in the reordering buffer 150 to the xGSN 104. In step S157, the reordering unit 153 updates the value of the expected sequence number to (the largest sequence number among the user data transmitted in S156 + 1). In step S158, the reordering unit 153 stops the reordering timer. After that, the processor 140 returns the process to step S140 (as indicated by reference character B).

If it is determined in step S155 that the reordering timer has not yet timed out (N in step S155), the reordering unit 153 transfers the process to step S159. In step S159, the reordering unit 153 updates the count value of the reordering timer by incrementing the count value by a predetermined time step. After that, the processor 140 returns the process to step S140 (as indicated by reference character B).

Referring back to FIG. 31, the receiving process performed by the radio network controller 103 will be described below. As described earlier, after transmitting the user data in the order of the sequence numbers "1" "3" "4" "5" and "2" the base station 102 transmits out the sequence data S that carries the sequence numbers "2" to "5". The radio network controller 103 stores the received user data in the first receive buffer 145 in the order in which they were received, that is, in the order of the sequence numbers "1", "3", "4", "5", and "2", after which the sequence data S is stored. The sequence numbers "2" to "5" stored in the sequence data S are arranged in the order of "3", "4"_{,} "5", and "2".

FIG. 31 illustrates, for example, the condition in which the radio network controller 103 is congested and, therefore, the processor 140 is unable to immediately start the processing of the received user data even when the user data are stored in the first receive buffer 145. In such cases, if certain user data is transmitted later than its succeeding user data, the reception of that certain user data may be completed before the turn to process that user data comes. For example, in FIG. 31, the reordering unit 153 in the radio network controller 103 starts the processing of the sequence number "1" only after its succeeding user data of sequence numbers "2" to "5" and the sequence data S have been received.

FIG. 31 also illustrates the condition in which the reordering buffer 150 is empty. Such a situation occurs when the process does not proceed to step S147 and beyond in FIG. 34 and no user data is therefore saved in the reordering buffer 150. In this case, the sequence number of the user data retrieved from the first receive buffer 145 is identical with the expected sequence number, so that the reordering unit 153 repeats the process from steps S140 to S146 in FIG. 33. Accordingly, when the reordering unit 153 retrieves the sequence data S from the first receive buffer 145 after the user data of sequence number "1", the expected sequence number is "2".

By referring to the sequence data S (step S141 in FIG. 33), the reordering unit 153 can recognize that the user data of the expected sequence number "2" and its succeeding user data of the consecutive sequence numbers "3" to "5" are stored in the first receive buffer 145. Therefore, in steps S143 to S146, the reordering unit 153 can retrieve the user data of the consecutive sequence numbers "2" to "5" from the first receive buffer 145 in the order of the sequence numbers.

The reordering unit 153 causes the user data transmitting unit 154 to transmit the user data in the same order in which they were retrieved from the first receive buffer 145. The second transmit buffer 148 stores the user data waiting for their turns to be transmitted. As indicated at reference numeral 214, the user data are stored in the second transmit buffer 148 in the order of the sequence numbers. The square boxes indicated at reference numeral 214 designate storage locations within the second transmit buffer 148. In the figure, the data stored in the square boxes located at higher positions are earlier in the transmission order than those located at lower positions. The square boxes indicated at reference numeral 215 provide a time chart of the user data to be transmitted from the radio network controller 103 to the xGSN 104. In the figure, the data stored in the square boxes located toward the right are earlier in the transmission order than those located toward the left.

In steps S143 to S146, the reordering unit 153 performs the reordering of the user data without saving them to the reordering buffer 150. In this case, the reordering unit 153 can retrieve the user data from the first receive buffer 145 in the order of the sequence numbers. That is, even when user data having an earlier sequence number is received later than user data having a later sequence number, the user data having the earlier sequence number can be retrieved earlier than the latter from the first receive buffer 145 for transmission.

Since the reordering performed in steps S143 to S146 does not involve saving the user data to the reordering buffer 150, the transmission delay that occurs in the case of the reordering performed using the reordering buffer 150 as described with reference to FIG. 29 can be eliminated. Reference numeral 217 in FIG. 31 indicates that the number of available time slots "a" has been increased, compared with the time chart 206 depicted in FIG. 29, by reducing the transmission delay of the user data of sequence numbers "2" to "5".

Further, in the case of the reordering performed using the reordering buffer 150 as described with reference to FIG. 29, a burst occurs when transmitting the user data to the xGSN 104. By contrast, in the process from steps S143 to S146, the reordering unit 153 performs the user data retrieval from the first receive buffer 145 and the user data transmission in alternating fashion. Since the process that performs the user data retrieval and user data transmission in alternating fashion is equivalent to the process that does not involve reordering, the transmission interval between successive user data does not greatly differ compared with the process that does not involve reordering. Accordingly, the reordering process performed in steps S143 to S146 can prevent the occurrence of a transmission burst of the kind that occurs in the case of the reordering performed using the reordering buffer 150. Reference numeral 216 in FIG. 31 indicates that the transmission interval between the respective user data of sequence numbers "1" to "5" is maintained constant, preventing the occurrence of a transmission burst.

If the sequence numbers carried in the sequence data are arranged in the same order as the user data transmission order, the reordering unit 153 can determine from the sequence data the order in which the user data are stored in the first receive buffer 145. In this case, the reordering unit 153 can retrieve the user data of any desired sequence number from the first receive buffer 145 without referring to the sequence number embedded in that user data.

In the reordering process using the reordering buffer, since the user data are first stored in the receive buffer, and then the stored user data are copied to the reordering buffer, the processing load of the processor in the radio network controller 103 increases. This can cause a delay in the processing of the user data or can lead to a failure of the data transmission function due to overload of the processor in the radio network controller 103.

According to the communication system 100 of the present embodiment, when the processing in the radio network controller 103 is delayed, and a large amount of user data is stored in the first receive buffer 145, the sequence data is also stored in the first receive buffer 145 together with the user data. Accordingly, when retrieving the user data from the first receive buffer 145, the radio network controller 103 can reorder the user data by referring to the sequence data. Since the overloading of the processor 140 due to the use of the reordering buffer can thus be eliminated, the above-noted problems such as the processing delay of the user data and the failure of the data transmission function can be resolved.

Furthermore, according to the communication system 100 of the present embodiment, bursty transmission of data from the radio network controller 103 can be prevented. As a result, the present embodiment can eliminate such problems as the occurrence of a functional failure of the communication system 100 due to communication bursts and dropouts of user data due to shaping.

The base station 102 may transmit the sequence data periodically, just as the first packet transmitting/receiving apparatus 2 depicted in FIG. 3 transmits the transmitted-packet indication information periodically. According to the present embodiment, since the base station 102 can create the sequence data by a relatively simple process of periodically gathering the sequence numbers, the present embodiment can be implemented without imposing a large load on the base station 102.

Further, the radio network controller 103 may be equipped with a sequence data request signal transmitting unit, just as the second packet transmitting/receiving apparatus 3 depicted in FIG. 3 is equipped with the transmitted-packet indication information request signal transmitting unit 54 depicted in FIG. 16. Then, the sequence data request signal transmitting unit may request the base station 102 to transmit the sequence data, just as the transmitted-packet indication information request signal transmitting unit 54 requests the first packet transmitting/receiving apparatus 2 to transmit the transmitted-packet indication information.

The base station 102 may be equipped with a sequence data request signal receiving unit, just as the first packet transmitting/receiving apparatus 2 depicted in FIG. 3 is equipped with the transmitted-packet indication information request signal receiving unit 24 depicted in FIG. 15. Then, the sequence data request signal receiving unit may receive the sequence data request signal, just as the transmitted-packet indication information request signal receiving unit 24 receives the transmitted-packet indication information request signal. In the first packet transmitting/receiving apparatus 2, when the transmitted-packet indication information request signal is received, the transmitted-packet indication information generating unit 21 generates the transmitted-packet indication information, and the transmitted-packet indication information transmitting unit 23 transmits it out. In like manner, in the base station 102, when the sequence data request signal is received, the sequence data generating unit 133 may generates the sequence data, and the sequence data transmitting unit 135 may transmit it out. According to the present embodiment, since the sequence data can be transmitted in accordance with demand from the radio network controller 103, the sequence data can be generated and transmitted efficiently.

The base station 102 may also be equipped with a data loss detection unit for detecting the occurrence of lost data, just as the first packet transmitting/receiving apparatus 2 depicted in FIG. 3 is equipped with the packet loss detection unit 25 depicted in FIG. 18. The "lost data" here refers to user data transmitted later than its succeeding user data when the user data from the base station 102 failed to be transmitted to the radio network controller 103 in the order specified by their sequence numbers. Further, the base station 102 may be equipped with a transmission permit/non-permit determining unit for determining whether the earlier described prescribed condition is satisfied after detection of the lost data, just as the first packet transmitting/receiving apparatus 2 depicted in FIG. 3 is equipped with the transmission permit/non-permit determining unit 26 depicted in FIG. 18. In the base station 102, when the transmission permit/non-permit determining unit has determined that the prescribed condition is satisfied, the sequence data generating unit 133 may generates the sequence data, and the sequence data transmitting unit 135 may transmit it out. According to the present embodiment, when a data loss has occurred, the sequence data can be transmitted out without having to check whether the lost data has been successfully transmitted. Accordingly, the present embodiment can be implemented without imposing a large load on the base station 102.

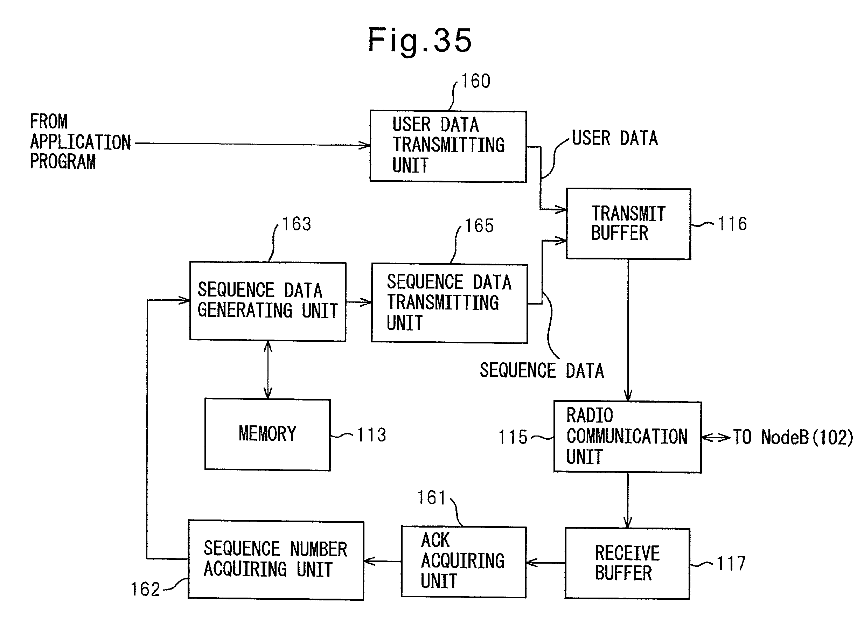

The following describes an embodiment in which the first packet transmitting/receiving apparatus 2 depicted in FIG. 3 is applied as the mobile station 101, the second packet transmitting/receiving apparatus 3 as the base station 102, and the third packet transmitting/receiving apparatus 4 as the radio network controller 103. FIG. 35 is a block diagram of the mobile station 101 depicted in FIG. 24.

The functions of a user data transmitting unit 160, an ACK acquiring unit 161, a sequence number acquiring unit 162, a sequence data generating unit 163, and a sequence data transmitting unit 165 are implemented by the processor 110 of FIG. 24 by executing the control program 111 stored in the program storage unit 112.

The user data transmitting unit 160 performs processing to transmit the user data generated by the application program 119 to the base station 102. The user data transmitting unit 160 stores the user data in the transmit buffer 116 for transmission to the base station 102, and the radio communication unit 115 transmits the user data stored in the transmit buffer 116 to the base station 102.

The ACK acquiring unit 161 acquires an acknowledge signal returned from the base station 102 for each user data by the retransmission control performed by the retransmission control unit 118. The sequence number acquiring unit 162 acquires the sequence number of the user data from the acknowledge signal that the ACK acquiring unit 161 acquired for that user data.

The sequence data generating unit 163 takes as input from the sequence number acquiring unit 162 the sequence numbers of the user data that have been successfully transmitted by the user data transmitting unit 160, and generates sequence data that carries the thus acquired sequence numbers. The sequence data designates the user data transmitted by the user data transmitting unit 160, and corresponds to one example of the transmitted-packet indication information illustrated in connection with the other embodiments described earlier. For example, when the mobile station 101 transmitted the user data in the order of the sequence numbers n1, n2, n3, and n4, the sequence data generating unit 163 may generate the sequence data by arranging the sequence numbers in the order n1, n2, n3, and n4, i.e., in the same order in which the user data were transmitted.

The sequence data generating unit 163 receives the sequence numbers from the sequence number acquiring unit 162. The sequence data generating unit 163 stores each received sequence number in the memory 113. As each sequence number is received, the sequence data generating unit 163 adds it to the series of sequence numbers so far stored in the memory 113, and thereby generates the series of sequence numbers arranged in the order in which the user data are transmitted. In accordance with transmit timing described later, the sequence data generating unit 163 retrieves the series of sequence numbers from the memory 113 and passes the sequence data containing the series of sequence numbers to the sequence data transmitting unit 165.

The sequence data transmitting unit 165 performs processing to transmit the sequence data generated by the sequence data generating unit 163 to the base station 102. The sequence data transmitting unit 165 stores the sequence data in the transmit buffer 116, and the radio communication unit 115 transmits the sequence data stored in the transmit buffer 116 to the base station 102.

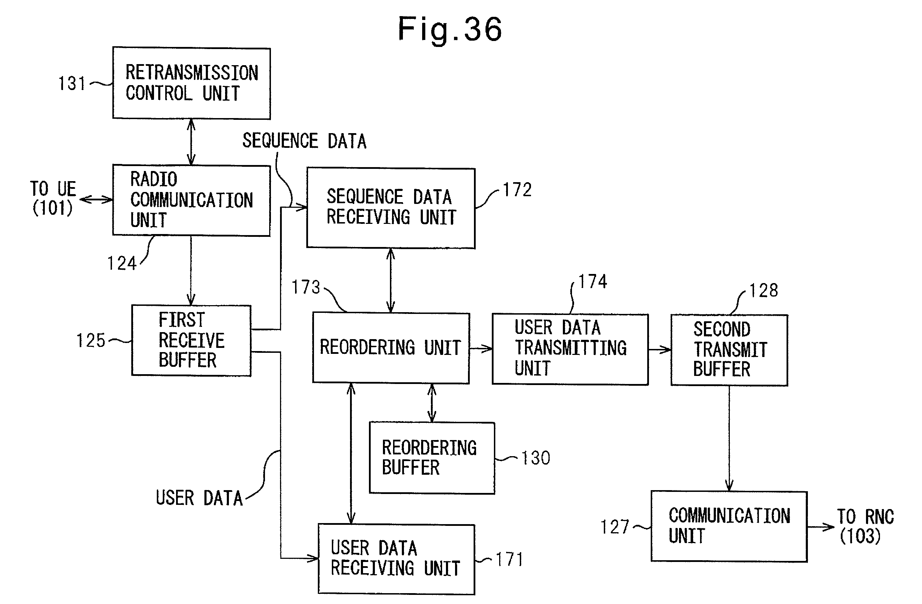

FIG. 36 is a second example of a block diagram of the base station 102 depicted in FIG. 25. Here, the functions of a user data receiving unit 171, a sequence data receiving unit 172, a reordering unit 173, and a user data transmitting unit 174 are implemented by the processor 120 of FIG. 25 by executing the control program 121 stored in the program storage unit 122. In the present embodiment, the reordering buffer 130 depicted in FIG. 25 is a buffer used for saving the user data from the first receive buffer 125, as necessary, when performing the reordering of the user data received from the mobile station 101.

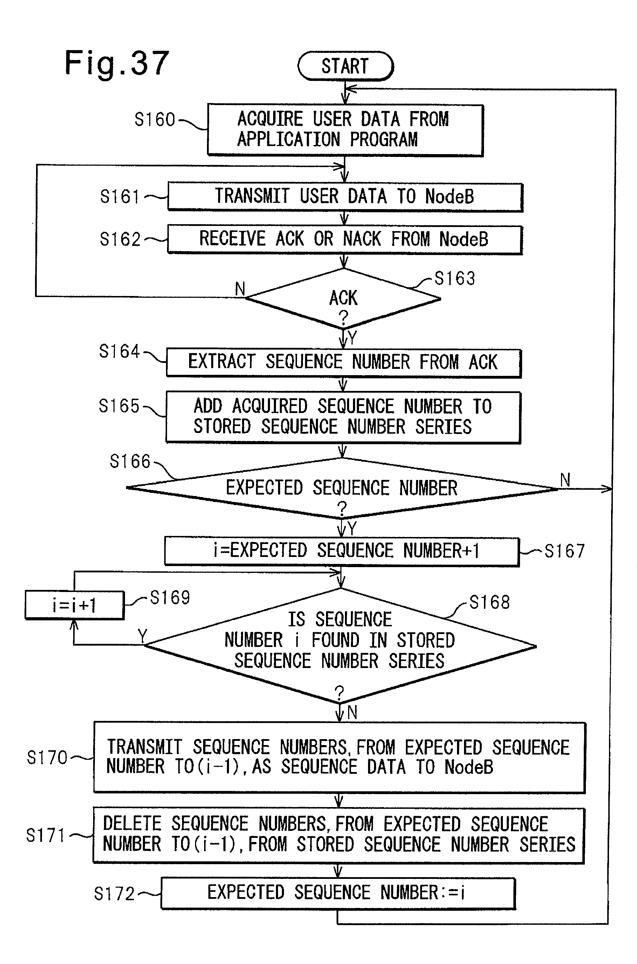

FIG. 37 is a flowchart illustrating the processing performed by the mobile station 101 depicted in FIG. 24. In step S160, the user data transmitting unit 160 acquires the user data generated by executing the application program 119. In step S161, the user data transmitting unit 160 transmits the user data acquired in step S160 to the base station 102. In step S162, the radio communication unit 115 receives an acknowledge signal (ACK) or a negative acknowledge signal (NACK) returned from the base station 102 for the user data transmitted in step S161.

In step S163, the processor 110 determines whether the radio communication unit 115 has received an acknowledge signal. If the radio communication unit 115 has received a negative acknowledge signal (N in S163), the processor 110 returns the process to step S161 to retransmit the user data. If it is determined in step S163 that the radio communication unit 115 has received an acknowledge signal (Y in S163), the processor 110 transfers the process to step S164.

In step S164, the ACK acquiring unit 161 acquires the acknowledge signal from the receive buffer 117. The sequence number acquiring unit 162 extracts from the acknowledge signal the sequence number of the user data for which the acknowledge signal was returned. The sequence data generating unit 163 receives the extracted sequence number from the sequence number acquiring unit 162.

In step S165, the sequence data generating unit 163 stores the sequence number acquired in step S164 into the memory 113. If the sequence number of any previously received user data is already stored in the memory 113, the user data generating unit 163 adds the acquired sequence number immediately after the sequence number already stored in the memory 113.

In step S166, the sequence data generating unit 163 determines whether the sequence number acquired in step S164 is the expected sequence number or not. In the processing performed by the mobile station 101 to transmit the user data to the base station 102, the "expected sequence number" refers to the sequence number that comes first in the transmission order among the sequence numbers of the user data yet to be transmitted. In the present embodiment, it is assumed that the transmission order is in ascending order of the sequence numbers. In this case, the "expected sequence number" refers to the smallest sequence number among the sequence numbers of the packets yet to be transmitted.

If the sequence number acquired in step S164 is not the expected sequence number (N in step S166), the processor 110 returns the process to step S160.

If the sequence number acquired in step S164 is the expected sequence number (Y in step S166), then in step S167 the sequence data generating unit 163 sets the value of index variable i to (the expected sequence number + 1).

In steps S168 and S169, the sequence data generating unit 163 searches for the smallest expected sequence number not stored in the memory 113. More specifically, in step S168, the sequence data generating unit 163 determines whether or not the sequence number equal to the value of index variable i is stored in the memory 113. As long as the sequence number equal to the value of index variable i is stored in the memory 113 (Y in step S168), the sequence data generating unit 163 increments the value of index variable i by 1 in step S169, and repeats the steps S168 and S169.

If the smallest expected sequence number not stored in the memory 113 is found (N in step S168), the sequence data generating unit 163 proceeds to step S170 to generate the sequence data that carries the consecutive sequence numbers starting from the expected sequence number and continuing up to (i-1). The sequence data transmitting unit 163 transmits the sequence data to the base station 102.

In step S171, the sequence data generating unit 163 deletes from the memory 113 the consecutive sequence numbers starting from the expected sequence number and continuing up to (i-1). In step S172, the sequence data generating unit 163 updates the value of the expected sequence number to the value of index variable i. After that, the processor 110 returns the process to step S160.

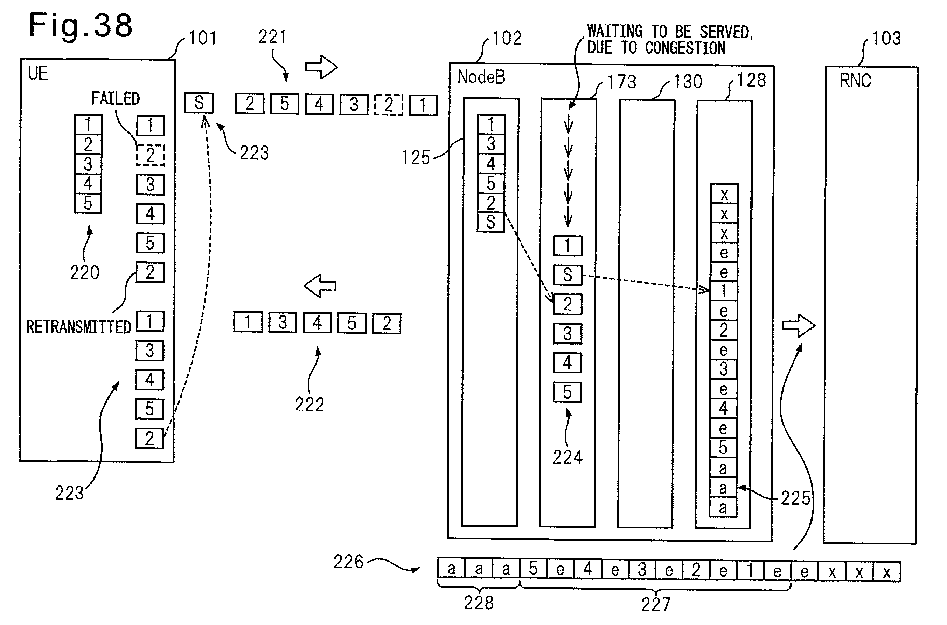

FIG. 38 is a diagram illustrating a second example of the operation of the communication system 100 depicted in FIG. 23. Reference numeral 220 indicates the user data generated by the application program 119. Square boxes indicate the user data divided into data frames, and the numbers "1" to "5" contained in the square boxes indicate the sequence numbers of the respective user data.

Reference numerals 221 indicates the user data transmitted from the mobile station 101 to the base station 102, and the numbers "1" to "5" contained in the square boxes indicate the sequence numbers of the respective user data. The data located toward the right are earlier in the transmission order than those located toward the left.

Reference numeral 222 indicates the ACK signals returned from the base station 102 to the mobile station 101 for the transmitted user data indicated at reference numeral 221. The numbers "1" to "5" contained in the square boxes indicate the sequence numbers of the user data successfully received by the base station 102. The data located toward the left are earlier in the transmission order than those located toward the right.

Suppose that, in the transmission from the mobile station 101 to the base station 102, the first transmission of the user data of sequence number "2" failed and the user data of sequence number "2" was retransmitted after transmission of the user data of sequence number "5". In this case, the user data are transmitted to the base station 102 in the order of the sequence numbers "1", "3", "4", "5", and "2" (step S161).

In the loop of steps S160 to S166, the value of the expected sequence number is "2" because of the failure of transmission of the user data of sequence number "2". As a result, the sequence numbers "3", "4", and "5" are held in the memory 113 until the mobile station 101 receives the ACK signal for the user data of sequence number "2". Reference numeral 223 indicates the sequence numbers stored in the memory 113.

When the mobile station 101 receives the ACK signal for the user data of sequence number "2" (Y in step S166), the sequence data generating unit 163 generates the transmitted-sequence data S that carries the sequence numbers "2" to "5" (step S170). The sequence data S may include the sequence numbers "2" to "5" arranged in the order in which the user data are transmitted from the mobile station 101 to the base station 102. For example, in the illustrated example, the sequence numbers "2" to "5" stored in the sequence data S are arranged in the order of "3", "4", "5", and "2".

The sequence data transmitting unit 165 transmits the sequence data S after transmission of the user data of sequence number "2". Reference number 223 indicates how the sequence data S is transmitted to base station 102 after the user data of sequence number "2".

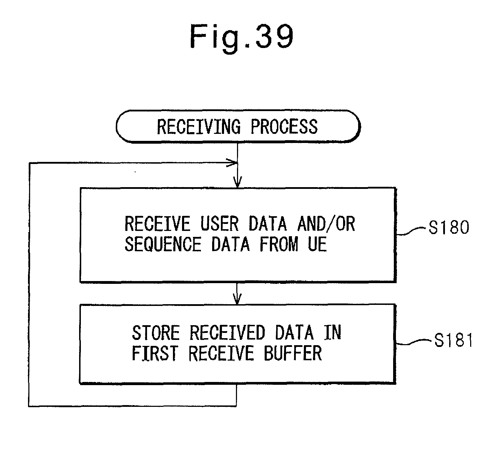

FIG. 39 is a flowchart illustrating the receiving process performed by the base station 102 depicted in FIG. 25. In step S180, the radio communication unit 124 in the base station 102 receives the user data and/or sequence data transmitted from the mobile station 101. In step S181, the radio communication unit 124 stores the data received in step S180 into the first receive buffer 125 in the order in which they were received. By repeating steps S180 and S181, the base station 102 successively stores the data received from the mobile station 101 into the first receive buffer 125.

The user data received from the mobile station 101 and stored in the first receive buffer 125 are first reordered according to their sequence numbers by the reordering unit 173 depicted in FIG. 36 and then transmitted on to the radio network control unit 103.

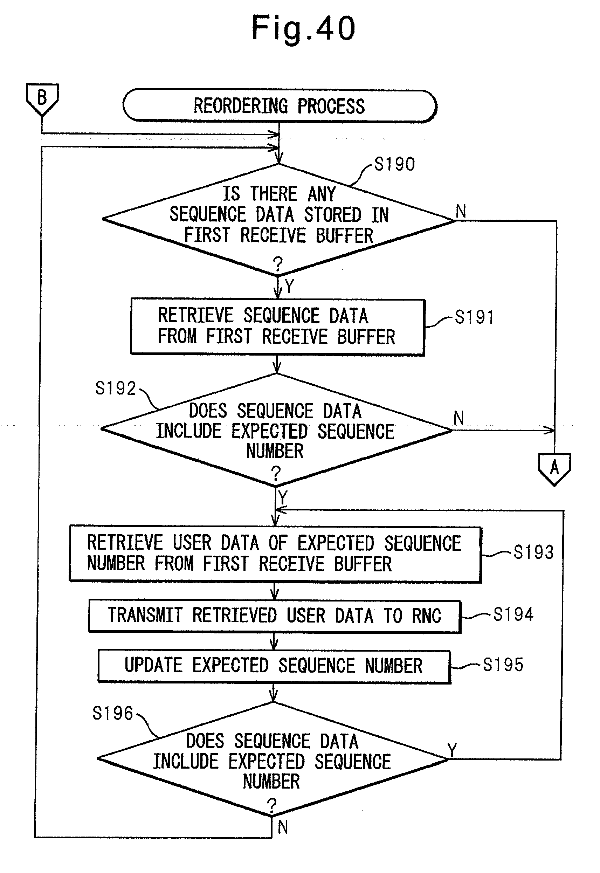

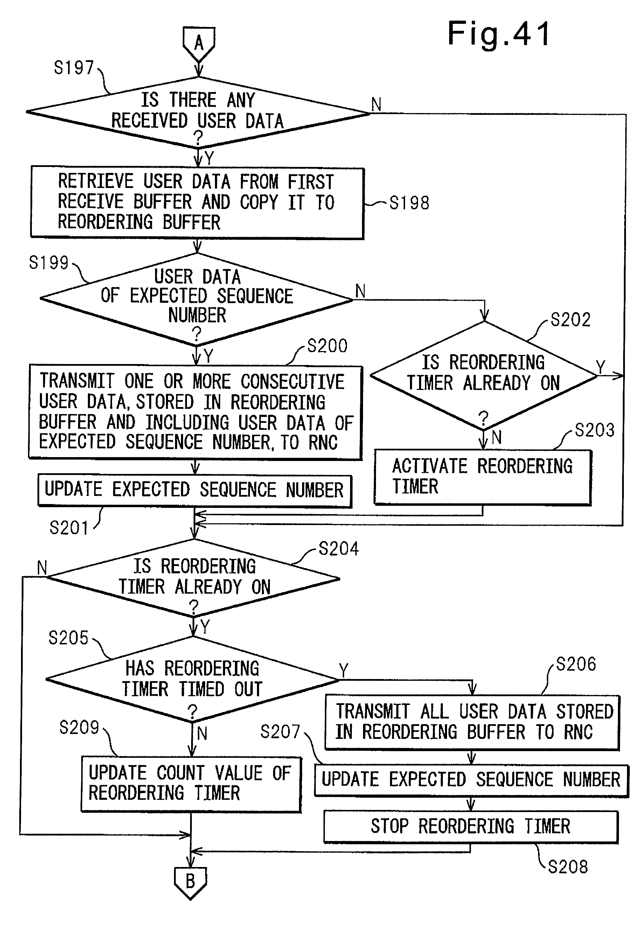

FIGS. 40 and 41 are a flowchart illustrating the reordering process performed by the base station 102 depicted in FIG. 25. In step S190, the reordering unit 173 determines whether there is any sequence data stored in the first receive buffer 125. If there is no sequence data stored in the first receive buffer 125 (N in step S190), the reordering unit 173 transfers the process to step S197 (as indicated by reference character A). If there is any sequence data stored in the first receive buffer 125 (Y in step S190), the reordering unit 173 transfers the process to step S191.

In step S191, the reordering unit 173 retrieves the sequence data from the first receive buffer 125. In step S192, the reordering unit 173 determines whether the retrieved sequence data includes the expected sequence number. In the processing performed by the base station 102 to receive user data from the mobile station 101, the "expected sequence number" refers to the sequence number of the user data whose sequence number is the smallest among the user data yet to be transmitted and whose succeeding user data also have yet to be reordered by the reordering unit 173.

If the expected sequence number is not included in the sequence data (N in step S192), the reordering unit 173 transfers the process to step S197 (as indicated by reference character A). If the expected sequence number is included in the sequence data (Y in step S192), the reordering unit 173 transfers the process to step S193.

In step S193, the user data receiving unit 171 retrieves the user data having the expected sequence number from the first receive buffer 125. In step S194, the user data transmitting unit 174 transmits the user data retrieved in step S193 to the radio network controller 103. In step S195, the reordering unit 173 updates the expected sequence number by incrementing the expected sequence number by 1.

In step S196, the reordering unit 173 determines whether the sequence data includes the updated expected sequence number. If the updated expected sequence number is included in the sequence data (Y in step S196), the reordering unit 173 returns the process to step S193.

Thus, the processor 120 repeats the process from steps S193 to S196, as long as the expected sequence number incremented by 1 in step S195 is included in the sequence data retrieved in step S191. As a result, the processor 120 can transmit the user data of consecutive sequence numbers to the radio network controller 103 by retrieving the user data from the first receive buffer 125 according to their sequence numbers. That is, by retrieving the user data from the first receive buffer 125 according to their sequence numbers, the reordering unit 173 can accomplish the reordering without using the reordering buffer.

If the updated expected sequence number is not included in the sequence data (N in step S196), the processor 120 returns the process to step S190.

In step S197, the reordering unit 173 determines whether there is any received user data stored in the first receive buffer 125. If there is any received user data stored (Y in step S197), the reordering unit 173 transfers the process to step S198. If there is no received user data (N in step S197), the reordering unit 173 transfers the process to step S204.

In step S198, the user data receiving unit 171 retrieves the user data from the first receive buffer 125, and the reordering unit 173 copies the retrieved user data to the reordering buffer 130, thereby saving the user data from the first receive buffer 125 into the reordering buffer 130. If there is any user data already stored in the reordering buffer 130, the reordering unit 173 stores the retrieved user data to add to the already stored user data.

In step S199, the reordering unit 173 identifies whether or not the sequence number of the user data saved to the reordering buffer 130 in step S198 is identical with the expected sequence number. If the sequence number of the saved user data is identical with the expected sequence number (Y in step S199), the reordering unit 173 transfers the process to step S200.

In step S200, the reordering unit 173 transmits one or more consecutive user data, including the user data of the expected sequence number, to the radio network controller 103 by taking them from among the user data stored in the reordering buffer 130. In step S201, the reordering unit 173 updates the value of the expected sequence number to (the largest sequence number among the user data transmitted in S200 + 1).

If it is determined in step S199 that the sequence number of the saved user data is not the expected sequence number (N in step S199), the reordering unit 173 transfers the process to step S202. In step S202, the reordering unit 173 checks to determine if a reordering timer is already ON or not. The reordering timer here may be, for example, a software timer implemented by the processing of the processor 120. The counting of the time by the reordering timer is started when user data having a sequence number other than the expected sequence number is saved to the reordering buffer 130 that is empty. The reordering timer is a timer used to cause the user data successively stored in the reordering buffer 130 to be transmitted to the radio network controller 103 when a predetermined time has elapsed after saving the first user data to the reordering buffer 130.

If it is determined in step S202 that the reordering timer is not ON (N in step S202), the reordering unit 173 transfers the process to step S203. In step S203, the reordering unit 173 activates the reordering timer, thus starting the counting of the time by the reordering timer. After that, the reordering unit 173 transfers the process to step S204. If it is determined in step S202 that the reordering timer is already ON (Y in step S202), the reordering unit 173 transfers the process to step S204.

In step S204, the reordering unit 173 checks to determine if the reordering timer is already ON or not. If the reordering timer is not ON (N in step S204), the processor 120 returns the process to step S190 (as indicated by reference character B). If the reordering timer is already ON (Y in step S204), the reordering unit 173 transfers the process to step S205.

In step S205, the reordering unit 173 determines whether the time counted by the reordering timer has exceeded the predetermined time, that is, whether the reordering timer has timed out. When the reordering timer has timed out (Y in step S205), the reordering unit 173 transfers the process to step S206.

In step S206, the reordering unit 173 transmits all the user data stored in the reordering buffer 130 to the radio network controller 103. In step S207, the reordering unit 173 updates the value of the expected sequence number to (the largest sequence number among the user data transmitted in S206 + 1). In step S208, the reordering unit 173 stops the reordering timer. After that, the processor 120 returns the process to step S190 (as indicated by reference character B).

If it is determined in step S205 that the reordering timer has not yet timed out (N in step S205), the reordering unit 173 transfers the process to step S209. In step S209, the reordering unit 173 updates the count value of the reordering timer by incrementing the count value by a predetermined time step. After that, the processor 120 returns the process to step S190 (as indicated by reference character B).

Referring back to FIG. 38, the receiving process performed by the base station 102 will be described below. As earlier described, after transmitting the user data in the order of the sequence numbers "1", "3", "4", "5", and "2", the mobile station 101 transmits out the sequence data S that carries the sequence numbers "2" to "5". The base station 102 stores the received user data in the first receive buffer 125 in the order in which they were received, that is, in the order of the sequence numbers "1", "3", "4", "5", and "2", after which the sequence data S is stored. Here, the sequence numbers "2" to "5" stored in the sequence data S are arranged in the order of "'3", "4", "5", and "2".

FIG. 38 illustrates, for example, the condition in which the base station 102 is congested and, therefore, the processor 120 is unable to immediately start the processing of the received user data even when the user data are stored in the first receive buffer 125. In such cases, if certain user data is transmitted later than its succeeding user data, the reception of that certain user data may be completed before the turn to process that user data comes. For example, in FIG. 38, the reordering unit 173 in the base station 102 starts the processing of the sequence number "1" only after its succeeding user data of sequence numbers "2" to "5" and the sequence data S have been received.

FIG. 38 also illustrates the condition in which the reordering buffer 130 is empty. Such a situation occurs when the process does not proceed to step S197 and beyond in FIG. 41 and no user data is therefore saved in the reordering buffer 130. In this case, the sequence number of the user data retrieved from the first receive buffer 125 is identical with the expected sequence number, so that the reordering unit 173 repeats the process from steps S190 to S196 in FIG. 40. Accordingly, after the reordering unit 173 retrieves the user data of sequence number "1" from the receive buffer 125, the expected sequence number becomes "2".

By referring to the sequence data S (step S191 in FIG. 40), the reordering unit 173 can recognize that the user data of the expected sequence number "2" and its succeeding user data of the consecutive sequence numbers "3" to "5" are stored in the first receive buffer 125. Therefore, in steps S193 to S196, the reordering unit 173 can retrieve the user data of the consecutive sequence numbers "2" to "5" from the first receive buffer 125 in the order of the sequence numbers.

The reordering unit 173 causes the user data transmitting unit 174 to transmit the user data in the same order in which they were retrieved from the first receive buffer 125. The second transmit buffer 128 stores the user data waiting for their turns to be transmitted. As indicated at reference numeral 225, the user data are stored in the second transmit buffer 128 in the order of the sequence numbers. The square boxes indicated at reference numeral 225 designate storage locations within the second transmit buffer 128. In the figure, the data stored in the square boxes located at higher positions are earlier in the transmission order than those located at lower positions. The square boxes indicated at reference numeral 226 provide a time chart of the user data to be transmitted from the base station 102 to the radio network controller 103. In the figure, the data stored in the square boxes located toward the right are earlier in the transmission order than those located toward the left.

In steps S193 to S196, the reordering unit 173 performs the reordering of the user data without saving them to the reordering buffer 130. In this case, the reordering unit 173 can retrieve the user data from the first receive buffer 125 in the order of the sequence numbers. That is, even when user data having an earlier sequence number is received later than user data having a later sequence number, the user data having the earlier sequence number can be retrieved earlier than the latter from the first receive buffer 125 for transmission.

Since the reordering performed in steps S193 to S196 does not involve saving the user data to the reordering buffer 130, the user data transmission delay that occurs in the case of the reordering performed using the reordering buffer can be eliminated. Reference numeral 228 in FIG. 38 indicates that the number of available time slots "a" has been increased by reducing the transmission delay of the user data of sequence numbers "2" to "5".

Further, in the case of the reordering performed using the reordering buffer, a burst occurs when transmitting the user data. By contrast, in the process from steps S193 to S196, the reordering unit 173 performs the user data retrieval from the first receive buffer 125 and the user data transmission in alternating fashion. Since the process that performs the user data retrieval and user data transmission in alternating fashion is equivalent to the process that does not involve reordering, the transmission interval between successive user data does not greatly differ compared with the process that does not involve reordering. Accordingly, the reordering process performed in steps S193 to S196 can prevent the occurrence of a transmission burst of the kind that occurs in the case of the reordering performed using the reordering buffer. Reference numeral 227 in FIG. 38 indicates that the transmission interval between the respective user data of sequence numbers "1" to "5" is maintained constant, preventing the occurrence of a transmission burst.

If the sequence numbers carried in the sequence data are arranged in the same order as the user data transmission order, the reordering unit 173 can determine from the sequence data the order in which the user data are stored in the first receive buffer 125. In this case, the reordering unit 173 can retrieve the user data of any desired sequence number from the first receive buffer 125 without referring to the sequence number embedded in that user data.

In the reordering process using the reordering buffer, since the user data are first stored in the receive buffer, and then the stored user data are copied to the reordering buffer, the processing load of the processor in the base station 102 increases. This can cause a delay in the processing of the user data or can lead to a failure of the data transmission function due to overload of the processor in the base station 102.

According to the communication system 100 of the present embodiment, when the processing in the base station 102 is delayed, and a large amount of user data is stored in the first receive buffer 125, the sequence data is also stored in the first receive buffer 125 together with the user data. Accordingly, when retrieving the user data from the first receive buffer 125, the base station 102 can reorder the user data by referring to the sequence data. Since the overloading of the processor 120 due to the use of the reordering buffer can thus be eliminated, the above-noted problems such as the processing delay of the user data and the failure of the data transmission function can be resolved.

Furthermore, according to the communication system 100 of the present embodiment, bursty transmission of data from the base station 102 can be prevented. As a result, the present embodiment can eliminate such problems as the occurrence of a functional failure of the communication system 100 due to communication bursts and dropouts of user data due to shaping.

The mobile station 101 may transmit the sequence data periodically, just as the first packet transmitting/receiving apparatus 2 depicted in FIG. 3 transmits the transmitted-packet indication information periodically. According to the present embodiment, since the mobile station 101 can create the sequence data by a relatively simple process of periodically gathering the sequence numbers, the present embodiment can be implemented without imposing a large load on the mobile station 101.

Further, the base station 102 may be equipped with a sequence data request signal transmitting unit, just as the second packet transmitting/receiving apparatus 3 depicted in FIG. 3 is equipped with the transmitted-packet indication information request signal transmitting unit 54 depicted in FIG. 16. Then, the sequence data request signal transmitting unit may request the mobile station 101 to transmit the sequence data, just as the transmitted-packet indication information request signal transmitting unit 54 requests the first packet transmitting/receiving apparatus 2 to transmit the transmitted-packet indication information.

The mobile station 101 may be equipped with a sequence data request signal receiving unit, just as the first packet transmitting/receiving apparatus 2 depicted in FIG. 3 is equipped with the transmitted-packet indication information request signal receiving unit 24 depicted in FIG. 15. Then, the sequence data request signal receiving unit may receive the sequence data request signal, just as the transmitted-packet indication information request signal receiving unit 24 receives the transmitted-packet indication information request signal. In the first packet transmitting/receiving apparatus 2, when the transmitted-packet indication information request signal is received, the transmitted-packet indication information generating unit 21 generates the transmitted-packet indication information, and the transmitted-packet indication information transmitting unit 23 transmits it out. In like manner, in the mobile station 101, when the sequence data request signal is received, the sequence data generating unit 163 may generates the sequence data, and the sequence data transmitting unit 165 may transmit it out. According to the present embodiment, since the sequence data can be transmitted in accordance with demand from the base station 102, the sequence data can be generated and transmitted efficiently.

The mobile station 101 may also be equipped with a data loss detection unit for detecting the occurrence of lost data, just as the first packet transmitting/receiving apparatus 2 depicted in FIG. 3 is equipped with the packet loss detection unit 25 depicted in FIG. 18. The "lost data" here refers to user data transmitted later than its succeeding user data when the user data from the mobile station 101 failed to be transmitted to the base station 102 in the order specified by their sequence numbers. Further, the mobile station 101 may be equipped with a transmission permit/non-permit determining unit for determining whether the earlier described prescribed condition is satisfied after detection of the lost data, just as the first packet transmitting/receiving apparatus 2 depicted in FIG. 3 is equipped with the transmission permit/non-permit determining unit 26 depicted in FIG. 18. In the mobile station 101, when the transmission permit/non-permit determining unit has determined that the prescribed condition is satisfied, the sequence data generating unit 163 may generates the sequence data, and the sequence data transmitting unit 165 may transmit it out. According to the present embodiment, when a data loss has occurred, the sequence data can be transmitted out without having to check whether the lost data has been successfully transmitted. Accordingly, the present embodiment can be implemented without imposing a large load on the mobile station 101.

While the present invention has been described in detail above with reference to the preferred embodiments, it will be understood by those skilled in the art that various modifications and changes can be made by any person skilled in the art, and that all of such modifications and changes that come within the range of the true spirit and purpose of the present invention fall within the scope of the present invention as defined by the appended claims.

## Claims

1. A packet transmitting apparatus comprising:
a packet transmitting unit which transmits a packet having a preassigned sequence number to a destination apparatus;
a transmitted-packet indication information generating unit which generates transmitted-packet indication information that indicates said packet transmitted by said packet transmitting unit; and
a transmitted-packet indication information transmitting unit which transmits said transmitted-packet indication information to said destination apparatus separately from said packet.

2. A packet transmitting apparatus as claimed in claim 1, wherein in the event of occurrence of a lost packet in a series of packets having consecutive sequence numbers preassigned thereto, said transmitted-packet indication information transmitting unit transmits said transmitted-packet indication information indicating said series of packets after said lost packet that has yet to be transmitted by said packet transmitting unit becomes ready for transmission.

3. A packet transmitting apparatus as claimed in claim 2, wherein said transmitted-packet indication information transmitting unit transmits said transmitted-packet indication information indicating said series of packets when said packet transmitting apparatus has acquired said lost packet.

4. A packet transmitting apparatus as claimed in claim 2, wherein said transmitted-packet indication information transmitting unit transmits said transmitted-packet indication information indicating said series of packets when said packet transmitting apparatus has received an acknowledge signal from said destination apparatus for said lost packet.

5. A packet transmitting apparatus as claimed in claim 1, wherein said transmitted-packet indication information transmitting unit transmits, at predetermined intervals of time, said transmitted-packet indication information indicating packets that have been transmitted during each of said intervals.

6. A packet transmitting apparatus as claimed in claim 1, further comprising a transmitted-packet indication information request signal receiving unit which receives from said destination apparatus a transmitted-packet indication information request signal for requesting transmission of said transmitted-packet indication information, and wherein
said transmitted-packet indication information transmitting unit transmits said transmitted-packet indication information when said transmitted-packet indication information request signal receiving unit has received said transmitted-packet indication information request signal.

7. A packet receiving apparatus comprising:
a packet receiving unit which receives a packet having a preassigned sequence number from a transmitting apparatus;
a receive buffer which stores said received packet;
a transmitted-packet indication information receiving unit which receives from said transmitting apparatus, separately from said packet, transmitted-packet indication information that indicates said packet transmitted by said transmitting apparatus; and
a packet reordering unit which retrieves from said receive buffer said packet indicated by said transmitted-packet indication information, and which reorders said packet in accordance with said sequence number.

8. A packet receiving apparatus as claimed in claim 7, wherein said transmitted-packet indication information carries a series of sequence numbers that identify packets transmitted from said transmitting apparatus and that are arranged in the order in which said packets were transmitted,
said receive buffer stores said packets in the order in which said packets were received, and
said packet reordering unit reorders said packets in accordance with said sequence numbers carried in said transmitted-packet indication information.

9. A communication system comprising a packet transmitting apparatus as claimed in claim 1 and a packet receiving apparatus as claimed in claim 7, wherein
said packet transmitting apparatus transmits said sequenced packets and said transmitted-packet indication information to said packet receiving apparatus.

10. A packet communication method comprising:
transmitting a packet having a preassigned sequence number from a packet transmitting apparatus to a packet receiving apparatus;
said packet transmitting apparatus generating transmitted-packet indication information that indicates said packet transmitted by said packet transmitting apparatus; and
said packet transmitting apparatus transmitting said transmitted-packet indication information to said packet receiving apparatus separately from said packet.

11. A packet communication method as claimed in claim 10, wherein in the event of occurrence of a lost packet in a series of packets having consecutive sequence numbers preassigned thereto, said transmitted-packet indication information indicating said series of packets is transmitted after said lost packet that has yet to be transmitted by said packet transmitting apparatus becomes ready for transmission.

12. A packet communication method as claimed in claim 10, comprising:
at said packet receiving apparatus, receiving said packet;
at said packet receiving apparatus, storing said received packet in a receive buffer;
at said packet receiving apparatus, receiving said transmitted-packet indication information; and
at said packet receiving apparatus, retrieving from said receive buffer said packet indicated by said transmitted-packet indication information, and reordering said packet in accordance with said sequence number.

13. A packet communication method as claimed in claim 12, wherein said transmitted-packet indication information carries a series of sequence numbers that identify packets transmitted from said transmitting apparatus and that are arranged in the order in which said packets were transmitted,
said receive buffer stores said packets in the order in which said packets were received, and
said packets are reordered in accordance with said sequence numbers carried in said transmitted-packet indication information.
